(19) Europäisches Patentamt
European Patent Office
Office européen des brevets

(11) **EP 3 129 264 B1**

(12) **EUROPÄISCHE PATENTSCHRIFT**

(45) Veröffentlichungstag und Bekanntmachung des Hinweises auf die Patenterteilung:
**04.04.2018 Patentblatt 2018/14**

(21) Anmeldenummer: **14747525.5**

(22) Anmeldetag: **01.08.2014**

(51) Int Cl.:
**B60T 13/68** *(2006.01)*      **B60T 13/38** *(2006.01)*
**B60T 15/02** *(2006.01)*      **B60T 15/18** *(2006.01)*

(86) Internationale Anmeldenummer:
**PCT/EP2014/002127**

(87) Internationale Veröffentlichungsnummer:
**WO 2015/154787 (15.10.2015 Gazette 2015/41)**

(54) **ELEKTROPNEUMATISCHE PARKBREMSSTEUEREINRICHTUNG**

ELECTRO-PNEUMATIC PARKING BRAKE CONTROL DEVICE

DISPOSITIF DE COMMANDE ÉLECTROPNEUMATIQUE DE FREIN DE STATIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.04.2014 DE 102014005169**

(43) Veröffentlichungstag der Anmeldung:
**15.02.2017 Patentblatt 2017/07**

(73) Patentinhaber: **KNORR-BREMSE Systeme für Nutzfahrzeuge GmbH**
**80809 München (DE)**

(72) Erfinder:
• **HECKER, Falk**
**71706 Markgröningen (DE)**
• **RÖTHER, Friedbert**
**74389 Cleebronn (DE)**
• **HERGES, Michael**
**80935 München (DE)**
• **HEEG, Sarah**
**71701 Schwieberdingen (DE)**

(56) Entgegenhaltungen:
DE-A1-102007 061 908      DE-A1-102011 101 438
DE-B3-102009 059 816

EP 3 129 264 B1

**Beschreibung**

Die Erfindung betrifft eine elektropneumatische Parkbremssteuereinrichtung zur Steuerung einer wenigstens einen Federspeicherbremszylinder beinhaltenden Feststellbremse, mit einem Anschluss für den wenigstens einen Federspeicherbremszylinder, einer mittels einer elektronischen Steuereinrichtung steuerbaren Magnetventileinrichtung, einem Relaisventil, dessen pneumatischer Steuereingang einerseits mit der ersten Magnetventileinrichtung und andererseits mit dem Anschluss für den wenigstens einen Federspeicherbremszylinder und dessen Arbeitsausgang mit dem Anschluss für den wenigstens einen Federspeicherbremszylinder verbunden ist, einem optionalen mit der elektronischen Steuereinrichtung verbundenen elektrischen Feststellbremssignalanschluss für einen elektrischen Feststellbremssignalgeber, über welchen Feststellbremssignale in die Steuereinrichtung eingesteuert werden und einem über ein Rückschlagventil abgesicherten Vorratsanschluss für wenigstens einen Druckluftvorrat, welcher einerseits mit der ersten Magnetventileinrichtung und andererseits mit einem Vorratseingang des Relaisventils verbunden ist, sowie mit einer Rückkopplungsleitung, durch welche der Arbeitsausgang und der pneumatische Steuereingang des Relaisventils miteinander verbindbar sind, gemäß dem Oberbegriff von Anspruch 1.

Bei Nutzfahrzeugen einschließlich Zugfahrzeug-Anhängerkombinationen sowie Schienenfahrzeugen sind Parkbremsen (auch Feststellbremsen genannt) mit Federspeicherbremszylindern ausgestattet, die in Lösestellung einen Federkompressionsraum mit Druckluft beaufschlagen und dadurch die Feder gespannt halten, während zum Bremsen der Federkompressionsraum entlüftet, d.h. mit Atmosphärendruck verbunden wird, so dass der Bremszylinder unter Wirkung der Feder eine Bremskraft erzeugt.

Es sind sowohl rein pneumatisch betriebene Parkbremsen bekannt, die mit einem vom Fahrer zu betätigenden bistabilen Parkbremsventil betrieben werden als auch elektro-pneumatische Anlagen mit einem bistabilen elektro-mechanischem Ventil, beispielsweise einem pneumatischen Relaisventil, das durch ein elektromechanisches, bistabiles Magnetventil gesteuert wird. Beide Ventilstellungen für "Parkbremse" und "Lösen" müssen dabei "stabil" sein, d. h. ohne Einwirkung einer Person oder von elektischer Energie in der jeweils gewählten Endstellung bleiben.

Beim Stand der Technik wird die Bistabilität daher entweder rein pneumatisch mit nachgeschalteten Relaisventilen und mehreren Betätigungs- und Regelkolben beispielsweise nach DE 10 2009 016 983 A1 oder DE 10 247 812 C1, was einen hohen Aufwand und einen großen Bauraum verursacht oder über bistabile Magnetventile mit nachgeschaltetem Relaisventil sichergestellt, wie in DE10 2006 055 570 B4 beschrieben wird. Bistabile Magnetventile sind jedoch teuer und in der Praxis störanfällig.

Weiterhin ist aus gattungsgemäßen DE 10 2007 061 908 B4 bekannt, die Bistabilität durch ein rückgekoppeltes Relaisventil zu realisieren, wobei die Rückkopplung durch ein erstes 3/2-Magnetventil realisiert wird, das unbestromt den Ausgang des Relaisventils mit dessen Steuerkammer verbindet und bestromt die Steuerkammer des Relaisventils von dessen Ausgang trennt und statt dessen mit dem Ausgang eines zweiten 3/2-Magnetventils verbindet, dass diesen Ausgang entweder mit Vorrat oder mit Atmosphäre verbinden kann. Diese Methode hat allerdings den Nachteil, dass zwei teure 3/2-Magnetventile benutzt werden und dass der Druck mit dem zweiten 3/2-Magnetventil ohne permanenten Luftverlust nur zwischen Vorrat und Atmosphäre umschaltbar, aber nicht auf einen Zwischenwert eingeregelt werden kann.

Der Erfindung liegt demzufolge die Aufgabe zugrunde, eine elektropneumatische Parkbremssteuereinrichtung der eingangs erwähnten Art derart weiter zu bilden, dass die an Feststellbremsen von schweren Nutzfahrzeugen gestellten Grundanforderungen wie Einlegen und Lösen der Feststellbremse mit bistabilem Verhalten, Regelbarkeit des Bremsdrucks für Hilfsbremse etc. möglichst kostengünstig und mit minimalem Bauraum realisiert werden.

Diese Aufgabe wird erfindungsgemäß durch die Merkmale von Anspruch 1 gelöst.

Offenbarung der Erfindung

Die Erfindung schlägt vor, dass ausgehend von DE 10 2007 061 908 B4 das erste 3/2 Magnetventil durch ein Drosselelement und das zweite 3/2 Magnetventil durch zwei 2/2-Wegemagnetventile mit jeweils einer Sperrstellung und einer Durchlassstellung ersetzt werden, wobei ein erstes 2/2-Wegemagnetventil als Einlassventil zwischen den Steuereingang des Relaisventils und den Vorratsanschluss und ein zweites 2/2-Wegemagnetventil zwischen den Steuereingang des Relaisventils und eine Drucksenke geschaltet ist.

Der grundsätzliche Erfindungsgedanke besteht also darin, dass Bistabilität zwar ähnlich wie bei DE10 2007 061 908 B4 durch Rückkopplung eines Relaisventils dargestellt wird. Im Unterschied dazu wird aber das erste 3/2-Magnetventil durch ein sehr preiswertes Drosselelement und das zweite 3/2-Magnetventil durch zwei stromlos geschlossene 2/2-Magnetventile ersetzt. Diese bilden eine erste Magnetventileinrichtung mit 3/3-Funktion, bei der sich im unbestromten Zustand beispielsweise beide 2/2-Magnetventile in ihrer Sperrstellung befinden und damit die Steuerkammer des Relaisventils sowohl gegenüber dem Druckluftvorrat als auch gegen Atmosphäre abgesperrt ist.

Deswegen kann zum Zwecke der Rückkopplung erfindungsgemäß wenigstens ein Drosselelement in der zwischen dem Arbeitsausgang und dem pneumatischen Steuereingang des Relaisventils gezogenen Rückkopplungsleitung angeordnet werden, derart, dass der Arbeitsausgang und der pneumatischen Steuereingang des Relaisventils miteinander stets in Strömungsverbindung stehen. Über die mit dem wenigstens einen Drosselelement versehene Rückkopplungsleitung entsteht ein Rückkopplungskreis, in dem der Druck am Arbeitsausgang des Relaisventils bzw. am Anschluss für den wenigstens einen Federspeicherbremszylinder in den Steuereingang des Relaisventils rückgekoppelt wird, wodurch der zuletzt eingenommene Zustand des wenigstens einen Federspeicherbremszylinders, beispielsweise dessen Zuspannstellung stabil verriegelt wird.

Unter einem Drosselelement soll dabei ein den Strömungsquerschnitt der Rückkopplungsleitung verengendes Element verstanden werden. Dabei wird der Luftmassenstrom zwischen dem Arbeitsausgang und dem pneumatischen Steuereingang des Relaisventils durch das Drosselelement (in beiden Strömungsrichtungen) auf einen Wert begrenzt, welcher beispielsweise geringer als der Luftmassenstrom ist, welcher mittels der ersten Magnetventileinrichtung an dem pneumatischen Steuereingang des Relaisventils erzeugbar ist. Dadurch ist einerseits stets die erwünschte Rückkopplung gegeben, andererseits aber eine Übersteuerung der Rückkopplung durch die erste Magnetventileinrichtung möglich.

Außer dem wenigstens einen Drosselelement sind in der Rückkopplungsleitung vorzugsweise keine weiteren, den Luftmassenstrom zwischen dem Arbeitsausgang und dem pneumatischen Steuereingang des Relaisventils behindernden oder sperrenden Elemente wie Schaltventile, Proportionalventile, Druckbegrenzungsventile etc. angeordnet.

Da diese Konstruktion ähnlich einer EBS-Druckregelventileinrichtung ist, können hier wie dort die gleichen Magnetventile eingesetzt werden und beiden Einrichtungen auf der gleichen Fertigungslinie und zumindest teilweise mit gleichen Gusswerkzeugen gefertigt werden, was Kosteneinsparungen mit sich bringt. Dazu trägt besonders auch das kostengünstig realisierbare Drosselelement in der Rückkopplungsleitung bei, das beispielsweise nur durch einen engen Kanal gebildet wird.

Gegenüber Lösungen, bei denen zur Darstellung des bistabilen Verhaltens zusätzlich zum Relaisventil noch andere Ventile nötig sind, benötigt die Erfindung weniger Teile. Gegenüber Lösungen mit teuren bistabilen Magnetventilen, deren Anfälligkeit gegen hohe Beschleunigungen (z.B. Hammerschlag auf Rahmen in der Nähe des Magnetventils) relativ hoch, deren Ausfallverhalten nur sehr schwer darstellbar und deren Lebensdauer begrenzt ist, hat die Erfindung den Vorteil, dass diese Nachteile weitgehend vermieden werden.

Insgesamt ergeben sich Vorteile im Hinblick auf einen einfachen und kostengünstigen Aufbau, einen geringen Bauraumbedarf sowie eine robuste, bewährte Technik. Weiterhin erlaubt die Erfindung eine Verwendung von Baukastenkomponenten wie 2/2-Magnetventile und Relaisventile.

Durch die in den Unteransprüchen aufgeführten Maßnahmen sind vorteilhafte Weiterbildungen und Verbesserungen der in Anspruch 1 angegebenen Erfindung möglich.

In üblicher Weise weist das Relaisventil zunächst eine mit dem pneumatischen Steuereingang verbundene Steuerkammer, wenigstens einen vom Druck in der Steuerkammer gesteuerten, ein Doppelsitzventil (Einlasssitz, Auslasssitz) betätigenden Relaiskolben sowie eine mit dem Arbeitsausgang verbundene Arbeitskammer auf, wobei der Relaiskolben die Steuerkammer und die Arbeitskammer begrenzt.

Abweichend von üblichen Ausführungen eines solchen Relaisventils ist eine der Steuerkammer zugewandte Wirkfläche $A_{SK}$ des Relaiskolbens größer als eine der Arbeitskammer zugewandte Wirkfläche $A_{AK}$ des Relaiskolbens.

Dann strömt über die Rückkopplungsleitung und das Drosselelement Luft von der Arbeitskammer des Relaisventils in die Steuerkammer des Relaisventils über, so dass die aufgrund des Drucks in der Steuerkammer erzeugte Kraft auf den Relaiskolben größer ist als die durch den Druck in der Arbeitskammer erzeugte Kraft auf den Relaiskolben, welcher zudem durch die Relaiskolbenfeder belastet ist. Dadurch verstärkt sich der gerade vorliegende Prozess (Belüften oder Entlüften durch Öffnen/Schließen des Einlasssitzes bzw. Öffnen/Schließen des Auslasssitzes) selbst, indem dann beispielsweise die vom rückgekoppelten Druck in der Steuerkammer herrührende Druckkraft auf den Relaiskolben die durch diesen bereits erfolgte Öffnung des Einlasssitzes des Doppelsitzventils stabil aufrecht erhält.

Gemäß einer Weiterbildung ist der Relaiskolben durch Federmittel in eine Entlüftungsstellung belastet, in welcher ein Auslasssitz des durch den Relaiskolben gesteuerten Doppelsitzventils geöffnet und ein Arbeitsanschluss des Relaisventils mit einer Entlüftung verbunden ist.

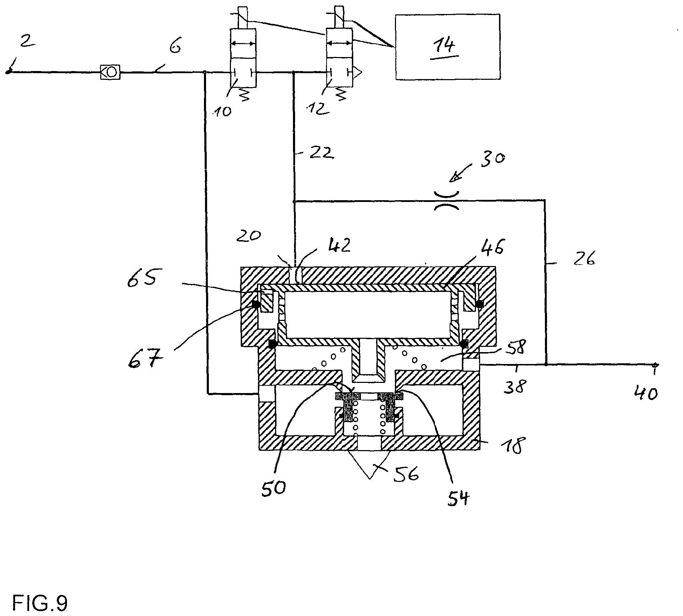

Besonders bevorzugt ist gemäß der Ausführungsform von Fig.9 die Steuerkammer des Relaisventils über ein weiteres Drosselelement mit der Entlüftung verbunden, wenn sich der Relaiskolben in Entlüftungsstellung oder in einer Mittelstellung befindet und die Verbindung der Steuerkammer mit der Entlüftung über das weitere Drosselelement getrennt, wenn sich der Relaiskolben in Belüftungsstellung befindet, wobei die Mittelstellung des Relaiskolbens dadurch gekennzeichnet ist, dass ein Einlasssitz und ein Auslasssitz eines durch den Relaiskolben gesteuerten Doppelsitzventils geschlossen sind und die Belüftungsstellung des Relaiskolbens dadurch, dass der Einlasssitz des Doppelsitzventils geöffnet und der Auslasssitz geschlossen ist.

Gemäß einer Weiterbildung ist die elektronische Steuereinrichtung mit einem elektrischen Feststellbremssignalanschluss für einen elektrischen Feststellbremssignalgeber verbunden, über welchen Feststellbremssignale in die elektronische Steuereinrichtung einsteuerbar sind.

Auch kann die elektronische Steuereinrichtung mit einem Signalanschluss zur Einsteuerung von Signalen verbunden sein, aus welchen die elektronische Steuereinrichtung Feststellbremssignale generiert. Dann sind bevorzugt auch Signale z.B. über einen Fahrzeugdatenbus in diesen Signalanschluss oder auch in den Feststellbremssignalanschluss der Parkbremssteuereinrichtung einsteuerbar, aus welchen die Steuereinrichtung dann selbst Feststellbremssignale generiert. Bei solchen Signalen kann es sich insbesondere um Signale handeln, welche einen Stillstand des Fahrzeugs im Rahmen eines Fahrerassistenzsystems wie einem Anfahrhilfesystem erkennen lassen, wobei dann beispielsweise bei Erkennen des Fahrzeugstillstands auf der Basis dieser Signale, die dann Fahrzeugstillstandssignale sind, die elektronische Steuereinrichtung ein Feststellbremssignal zum Zuspannen der Parkbremse erzeugt. Alternativ könnten in die Parkbremssteuereinrichtung eingesteuerte Signale, aus denen dann die elektronische Steuereinrichtung der Parkbremssteuereinrichtung Feststellbremssignale generiert, von beliebigen anderen Fahrerassistenzsystemen stammen wie beispielsweise von einem ACC-System (Adaptive Cruise Control) für den Fall, dass die Parkbremse während der Fahrt als Hilfsbremse verwendet wird. In allen diesen Fällen werden die Feststellbremssignale daher nicht abhängig von einer Betätigung des Feststellbremssignalgebers sondern von einem oder mehreren Fahrerassistenzsystemen automatisch erzeugt.

Hierzu ist dann dieser Signalanschluss oder der Feststellbremssignalanschluss ausgebildet, dass er an einen Fahrzeugdatenbus anschließbar ist, um über den Fahrzeugdatenbus geleitete Signale in die elektronische Steuereinrichtung einzusteuern, welche dann dort abhängig von diesen Signalen Feststellbremssignale generiert. Die Kommunikation zwischen der elektronischen Steuereinrichtung und dem Fahrzeugdatenbus ist dann bevorzugt bidirektional.

Besonders bevorzugt besitzen das erste 2/2-Wegemagnetventil und das zweite 2/2-Wegemagnetventil jeweils eine stromlose Sperrstellung und eine bestromte Durchlassstellung. Dann ist bei einem Ausfall der elektrischen Energieversorgung der Steuereingang des Relaisventils sowohl vom Vorratsanschluss wie auch von der Drucksenke abgekoppelt, so dass keine Steuerdruckluft vom Vorratsanschluss zum Relaisventil gelangen oder von diesem über die Drucksenke entweichen kann.

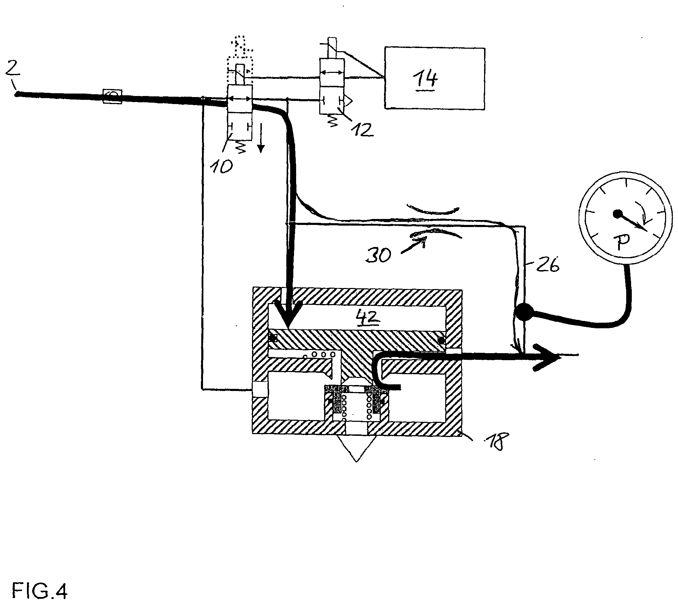

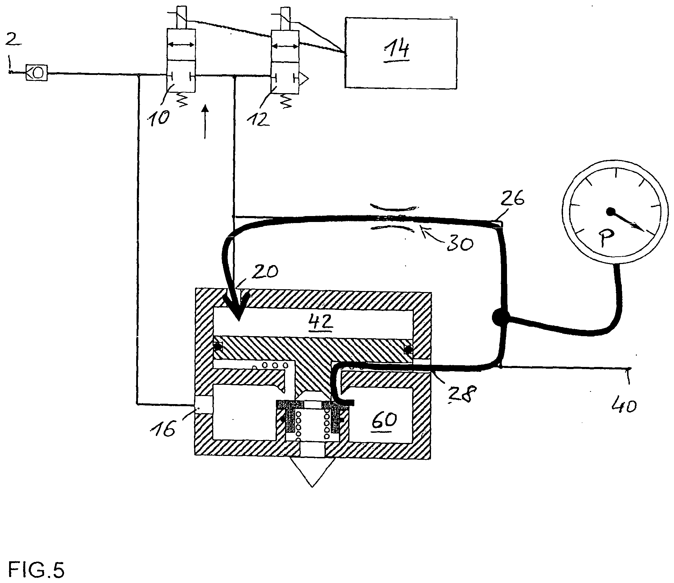

Gemäß einer Weiterbildung nach Fig.4 und Fig.5 ist vorgesehen, dass bei einem Einsteuern oder einem Generieren eines einen Zustand "Fahren" repräsentierenden Feststellbremssignals in die elektronische Steuereinrichtung oder in der elektronischen Steuereinrichtung das zweite 2/2-Wegemagnetventil in Sperrstellung und das erste 2/2-Wegemagnetventil zunächst in Durchlassstellung steuert. Beispielsweise durch Bestromen wird daher über einen bestimmten Zeitraum das erste 2/2-Wegemagnetventil zunächst in Durchlassstellung geschaltet, während das zweite 2/2-Wegemagnetventil in Sperrstellung verbleibt. Nach Ablauf der bestimmten Zeitdauer, welche notwendig ist, damit der Druck am Anschluss für den wenigstens einen Federspeicherbremszylinder den vollen Lösedruck des Federspeicherbremszylinders erreicht hat, wird dann das erste 2/2-Wegemagnetventil in Sperrstellung gesteuert. Somit ist der Steuereingang nur noch gedrosselt mit dem Arbeitsausgang verbunden. Eine sich eventuell, z.B. durch einen Defekt, ergebende, leichte Undichtigkeit zu einer Drucksenke hin, würde über den Einlasssitz des Relaisventils kompensiert.

Bei einem Einsteuern oder einem Generieren eines einen Zustand "Feststellbremse mit bestimmtem Bremsdruckwert betätigen" repräsentierenden Feststellbremssignals in die die elektronische Steuereinrichtung oder in der elektronischen Steuereinrichtung steuert diese das erste 2/2-Wegemagnetventil und/oder das zweite 2/2-Wegemagnetventil abhängig von den dem jeweiligen Bremsdruckwert in Sperrstellung oder in Durchlassstellung. Dies ist insbesondere im Rahmen einer Hilfs- oder Notbremsung der Fall, in welchem die Feststellbremse die Betriebsbremse ersetzen oder sie unterstützen muss.

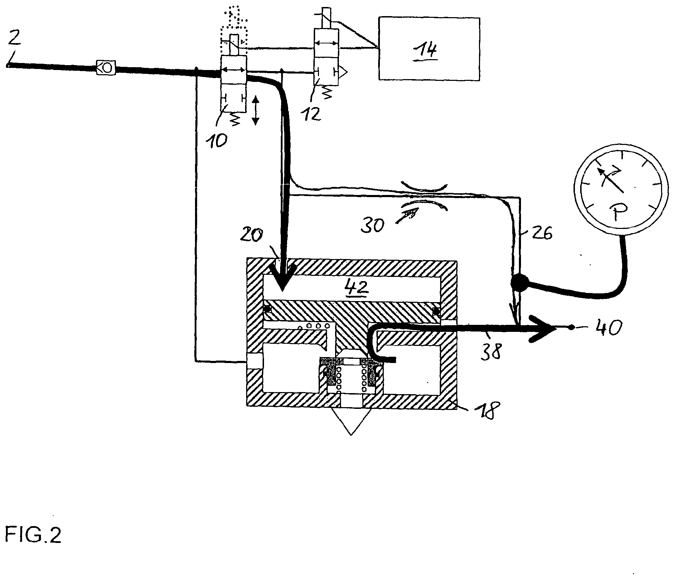

Für eine Drucksteigerung an dem Anschluss für den wenigstens einen Federspeicherbremszylinder wird beispielsweise gemäß Fig.2 das erste 2/2-Wegemagnetventil in Durchlassstellung gesteuert, so dass der Druck am Steuereingang des Relaisventils und damit auch am Anschluss für den wenigstens einen Federspeicherbremszylinder erhöht wird.

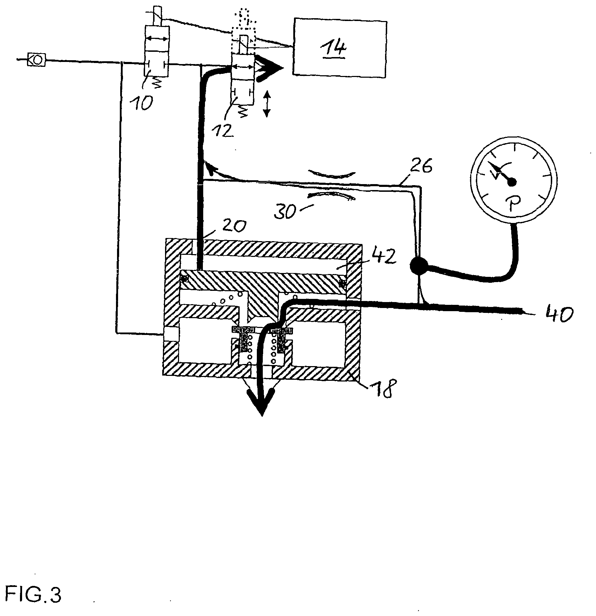

Für eine Drucksenkung an dem Anschluss für den wenigstens einen Federspeicherbremszylinder wird beispielsweise gemäß Fig.3 das zweite 2/2-Wegemagnetventil in Durchlassstellung geschaltet, so dass der Druck am Steuereingang des Relaisventils und damit auch am Anschluss für den wenigstens einen Federspeicherbremszylinder verringert wird.

Im ersten Fall kann die elektronische Steuereinrichtung das erste 2/2-Wegemagnetventil und im zweiten Fall das zweite 2/2-Wegemagnetventil wechselweise oder gepulst in Sperrstellung und über einen demgegenüber längeren Zeitraum in Durchlassstellung steuern, um einen rampenförmigen oder allmählichen Druckanstieg oder Druckabfall zu erzielen, der gerade für ein feinfühliges Dosieren bzw. für eine Regelung der Feststellbremskraft bzw. des Feststellbremsdrucks insbesondere im Rahmen einer Hilfs- oder Notbremsung vorteilhaft ist.

Die Luftströmung durch das Drosselelement, die sich je nach aktueller Druckdifferenz zwischen Arbeitsausgang und Steuereingang des Relaisventils eventuell ergibt, sowie eine sich eventuell, z.B. durch einen Defekt ergebende, leichte Undichtigkeit zu einer Drucksenke oder zum Vorratsdruck hin, kann durch kurzzeitige Bestromung des gegensinnig wirkenden 2/2 Magnetventils kompensiert werden.

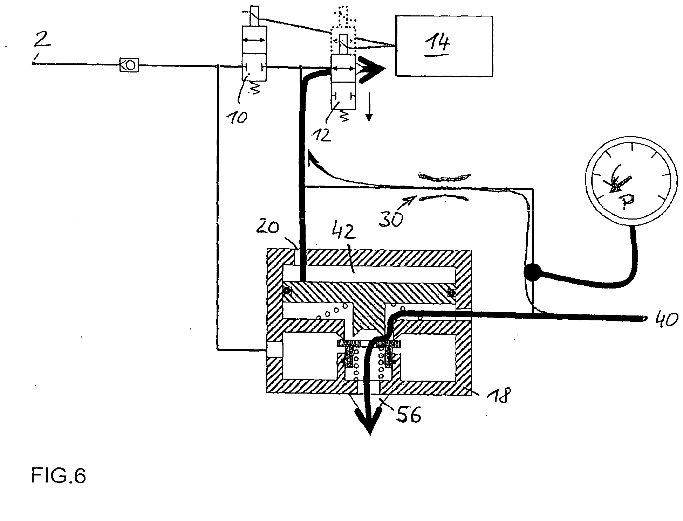

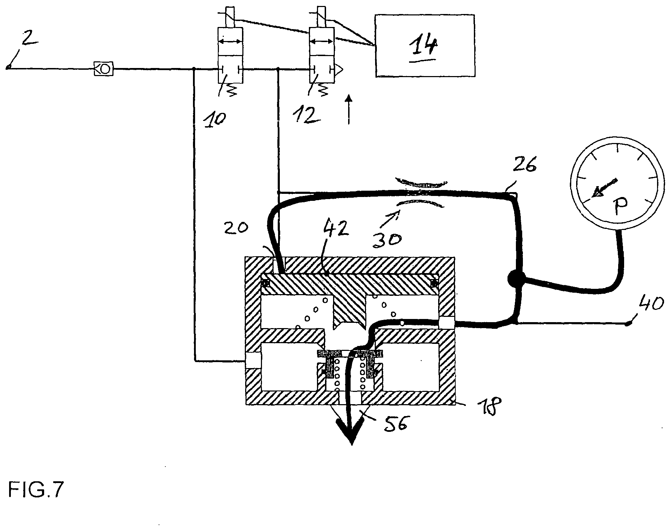

Gemäß einer Weiterbildung nach Fig.6 und Fig.7 kann bei einem Einsteuern oder Generieren eines einen Zustand "Feststellbremsen" repräsentierenden Feststellbremssignals in die die elektronische Steuereinrichtung oder in der elektronischen Steuereinrichtung diese das erste 2/2-Wegemagnetventil in Sperrstellung und das zweite 2/2-Wegemagnetventil zunächst in Durchlassstellung und dann in Sperrstellung steuern. Beispielsweise durch Bestromen wird daher über einen bestimmten Zeitraum zunächst das zweite 2/2-Wegemagnetventil in Durchlassstellung geschaltet, während das erste 2/2-Wegemagnetventil in Sperrstellung verbleibt. Nach Ablauf der bestimmten Zeitdauer, welche notwendig ist, damit der Druck am Anschluss für den wenigstens einen Federspeicherbremszylinder zumindest soweit abgesunken ist, dass das Relaisventil auch nach Abschalten des zweiten 2/2-Wegemagnetventils der Entlüftestellung verbleibt, wird dann das zweite 2/2-Wegemagnetventil in Sperrstellung gesteuert. Somit ist der Steuereingang nur noch gedrosselt mit dem Arbeitsausgang verbunden. Eine sich eventuell, z.B. durch einen Defekt, ergebende, leichte Undichtigkeit zum Vorratsdruck hin, würde über den Auslasssitz des Relaisventils entlüftet.

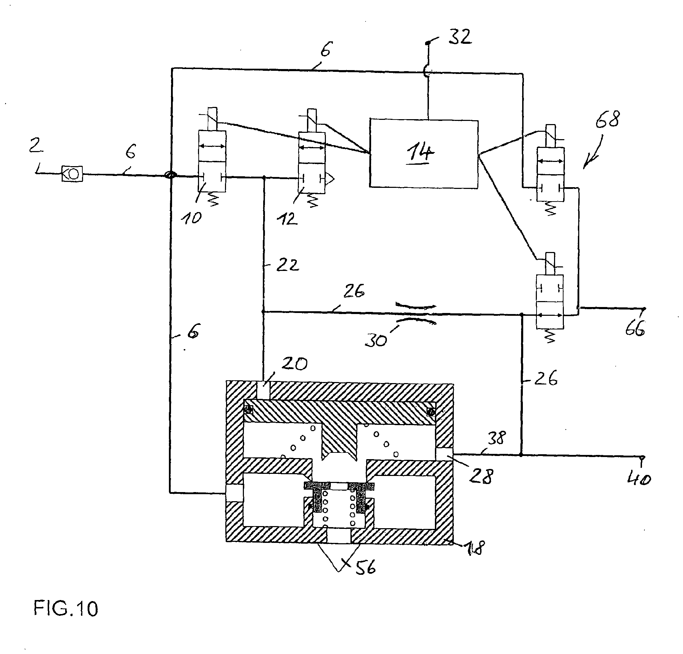

Besonders bevorzugt ist gemäß den Ausführungsformen von Fig.10 bis Fig. 13 die elektromagnetische Parkbremssteuereinrichtung für eine Zugfahrzeug-Anhängerkombination vorgesehen und weist dann zumindest einen Anschluss für ein Anhängersteuerventil auf, welcher mit dem Anschluss für den wenigstens einen Federspeicherbremszylinder verbindbar ist.

Hierfür ist beispielsweise eine zweite, von der elektronischen Steuereinrichtung steuerbare Magnetventileinrichtung vorgesehen ist, welche ausgebildet ist, dass sie entweder den Vorratsanschluss mit dem Anschluss für das Anhängersteuerventil oder den Arbeitsausgang des Relaisventils mit dem Anschluss für das Anhängersteuerventil verbindet.

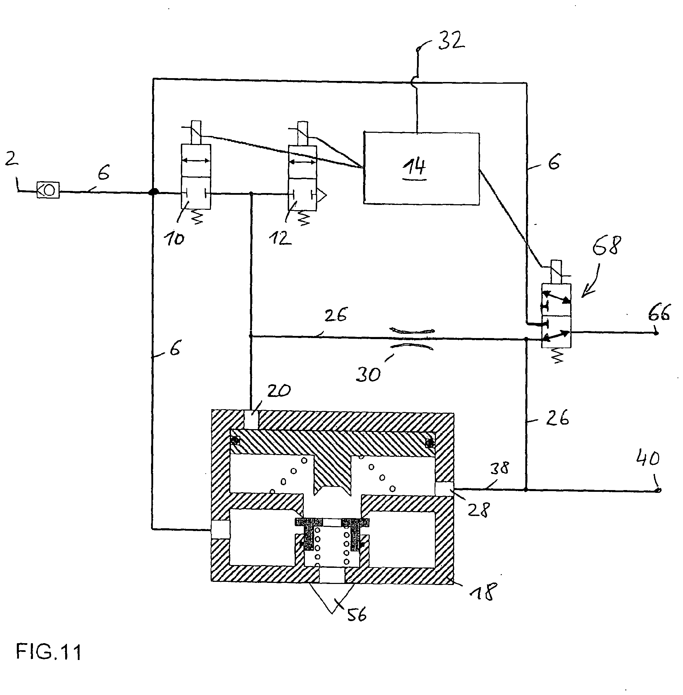

Vorzugsweise wird die zweite Magnetventileinrichtung durch ein einziges 3/2-Wegemagnetventil oder zwei 2/2-Wegemagnetventile gebildet, wie Fig.11/13 und Fig.10/12 zeigen.

Bei den Ausführungsvarianten gemäß Fig.10 und Fig. 11 ist der wenigstens eine Anschluss für das Anhängersteuerventil im vollständig unbestromten Zustand der zweiten Magnetventileinrichtung mit dem Arbeitsausgang des Relaisventils verbunden, im vollständig bestromten Zustand mit dem Vorratsdruck.

Dabei kann beispielsweise bei einem Einsteuern oder Generieren eines einen Zustand "Test" repräsentierenden Feststellbremssignals in die elektronische Steuereinrichtung oder in der elektronischen Steuereinrichtung die zweite Magnetventileinrichtung von der elektronischen Steuereinrichtung gesteuert werden, dass sie den Vorratsanschluss mit dem Anschluss für das Anhängersteuerventil verbindet. Hierbei wird bei entlüftetem Anschluss für den wenigstens einen Federspeicherbremszylinder der Anschluss für das Anhängersteuerventil belüftet, zum Testen, ob das über den zugespannten, wenigstens einen Federspeicherbremszylinder eingebremste Zugfahrzeug bei ungebremstem Anhänger die Zugfahrzeug-Anhängerkombination im Stillstand halten kann.

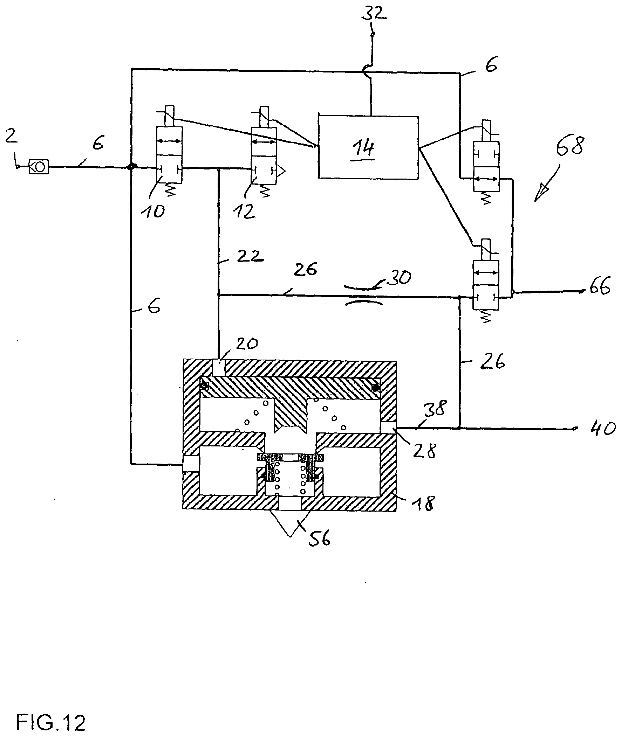

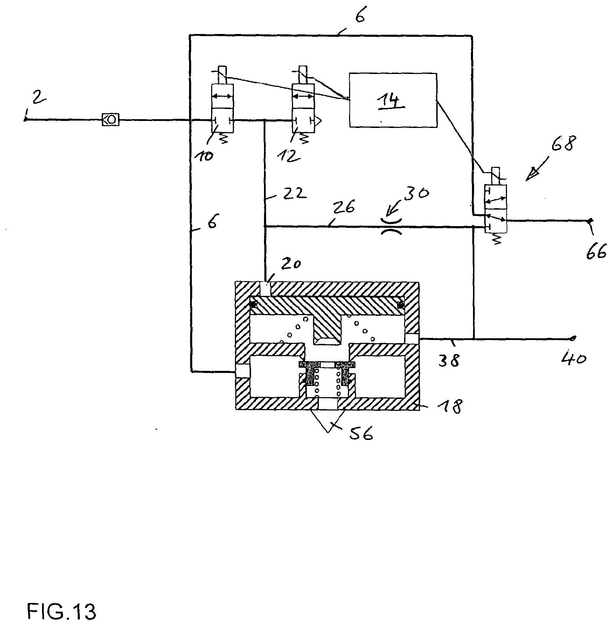

Wenn der Anhänger bei zugespannter Feststellbremse und außer Kraft gesetzter elektrischer Energieversorgung (Zündung "Aus") nicht mitgebremst werden soll, so muss der wenigstens eine Anschluss für das wenigstens eine Anhängersteuerventil mit dem Vorratsanschluss verbunden sein. Dazu können weitere Ausführungsvarianten gemäß Fig. 12 und Fig. 13 vorgesehen werden.

Die diesbezügliche Realisierung erfolgt ebenfalls mit einer zweiten Magnetventileinrichtung nach Fig.12 und Fig.13, welche dann bevorzugt so ausgebildet ist, dass sie vollständig stromlos den Vorratsanschluss mit dem wenigstens einen Anschluss für das Anhängersteuerventil verbindet. Andererseits verbindet dann die zweite Magnetventileinrichtung vollständig bestromt den Arbeitsausgang des Relaisventils mit dem Anschluss für das Anhängersteuerventil, beispielsweise um eine Druckregelung an den pneumatischen Bremsaktuatoren des Zugfahrzeugs und des Anhängers durchzuführen.

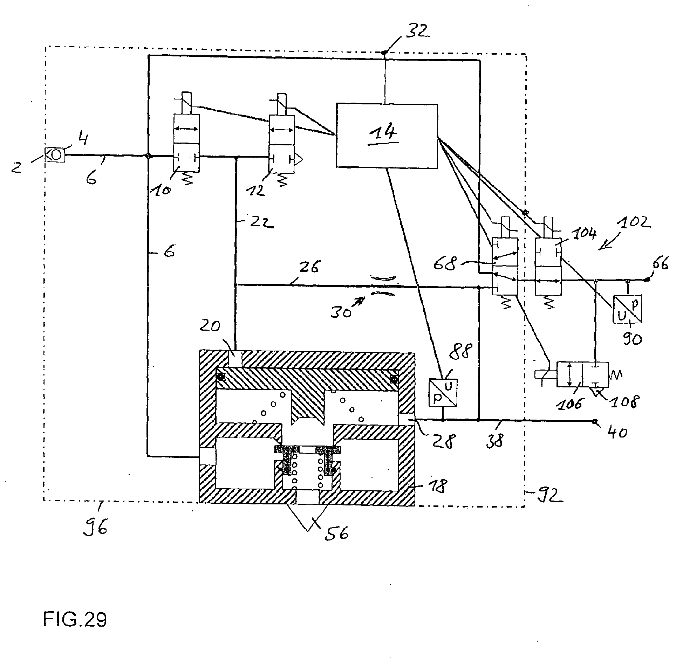

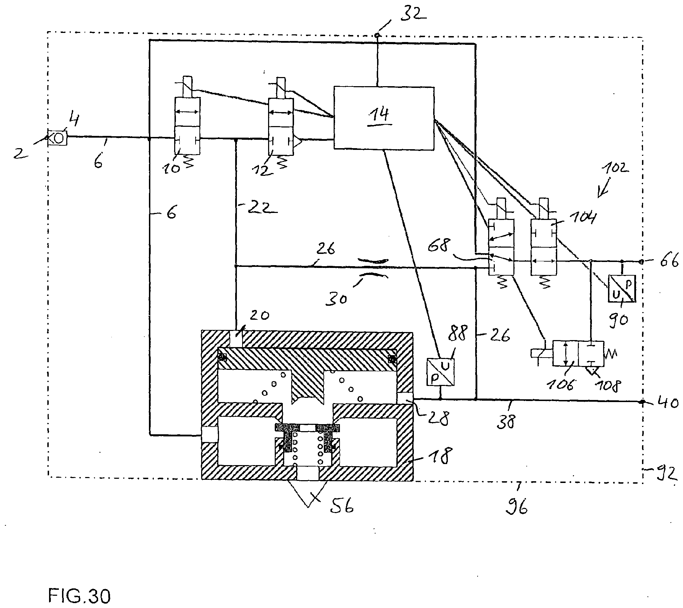

In weiteren Ausführungsvarianten, z.B. nach Fig. 29 und Fig. 30 kann über eine vierte Magnetventileinrichtung, die in Bezug auf die Strömung zwischen der zweiten Magnetventileinrichtung und dem Anschluss für das Anhängersteuerventil angeordnet ist, das Anhängersteuerventil mit der zweiten Magnetventileinrichtung oder mit einer Drucksenke verbunden werden.

Mit anderen Worten kann eine vierte Magnetventileinrichtung vorgesehen sein, durch welche der von der zweiten Magnetventileinrichtung an den Anschluss für das Anhängersteuerventil ausgesteuerte Druck absperrbar oder weiterleitbar ist, wobei bei durch die vierte Magnetventileinrichtung abgesperrtem, von der zweiten Magnetventileinrichtung erzeugtem Druck der am Anschluss für das Anhängersteuerventil anstehende Druck in Bezug auf eine Drucksenke absperrbar oder in diese Drucksenke weiter leitbar ist.

Dadurch kann ein mit dem Zugfahrzeug verbundener Anhänger alleine eingebremst werden, ohne die Federspeicherzylinder des Zugfahrzeugs zuzuspannen (Streckbremse). Optional kann auch ein Drucksensor vorhanden sein, der den zum Anhängersteuerventil ausgesteuerten Druck misst und somit einen geschlossenen Druckregelkreis ermöglicht.

Ist die zweite Magnetventileinrichtung als 3/2- Magnetventil ausgeführt, so kann die vierte Magnetventileinrichtung nach Fig.29 und Fig.30 durch ein im unbestromten Zustand offenes 2/2 Magnetventil, das die zweite Magnetventileinrichtung mit dem Anhängersteuerventil verbindet und ein stromlos geschlossenes 2/2 Magnetventil, das im bestromten Zustand das Anhängersteuerventil mit einer Drucksenke verbinden ausgeführt sein.

Ist die zweite Magnetventileinrichtung als zwei 2/2- Magnetventile ausgeführt, so kann der Anschluss zum Anhängersteuerventil bereits durch die zweite Magnetventileinrichtung vom Vorrat und vom Arbeitsausgang des Relaisventils getrennt werden, indem beide 2/2- Magnetventile in ihre "Geschlossen"-Stellung geschaltet werden. Somit genügt es, als vierte Magnetventileinrichtung ein einzelnes, stromlos geschlossenes 2/2 Magnetventil vorzusehen, das im bestromten Zustand den Anschluss zum Anhängersteuerventil mit einer Drucksenke verbindet.

Wenn auch bei durch Ausfall oder Abschalten (Zündung "Aus") deaktivierter elektrischer Energieversorgung die Feststellbremse noch zuspannbar sein soll, so kann beispielsweise über ein Wechselventil (select low) und ein manuell betätigbares Ventil oder von einer zusätzlichen elektrischen Energieversorgung versorgtes Magnetventil der Steuereingang des Relaisventils entlüftet werden.

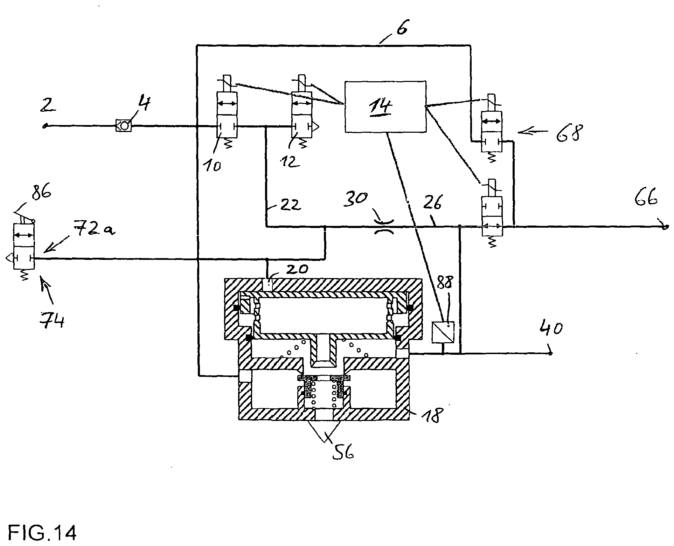

Demzufolge kann gemäß Fig.14 bis Fig.17 eine dritte Ventileinrichtung vorgesehen sein, mit wenigstens einem manuell, pneumatisch oder elektrisch steuerbaren Ventil mit einer Durchlassstellung und einer Sperrstellung, welches in der Durchlassstellung den Steuereingang des Relaisventils mit einer Drucksenke verbindet oder in der Sperrstellung diese Verbindung sperrt.

Falls gemäß Fig.14 ein manuell steuerbares Ventil herangezogen wird, so kann dieses beispielsweise in der Fahrerkabine platziert werden, um damit ein Einlegen der Feststellbremse vom Fahrersitz aus zu ermöglichen.

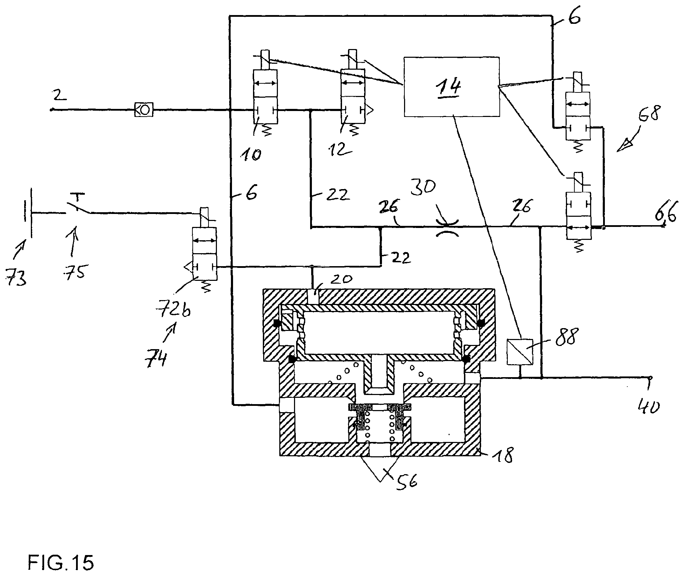

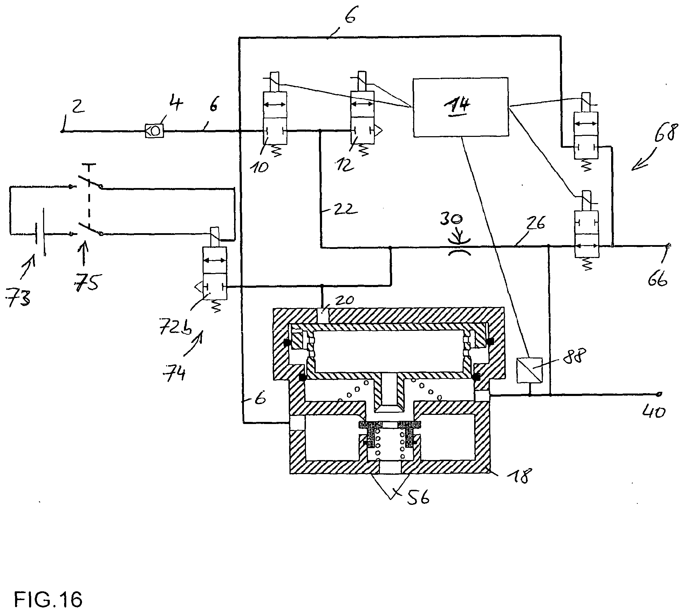

Im Falle eines elektrisch steuerbaren Ventil ist dies gemäß Fig.15 und Fig.16 vorzugsweise über einen elektrischen Schalter, vorzugsweise ebenfalls in der Fahrerkabine, mit einer weiteren, von der Bord-Energieversorgung unabhängigen elektrischen Stromversorgung, beispielsweise einer kleinen Batterie, verbunden. Auf diese Weise ist selbst bei ausgefallener oder abgeschalteter (Zündung "Aus") elektrischer Energieversorgung die Parkbremse noch zuspannbar.

Um in der elektropneumatischen Parkbremssteuereinrichtung wirkende Drücke zu ermitteln und um Funktionen und Betriebszustände zu überwachen, können an unterschiedlichen Stellen Drucksensoren vorgesehen werden.

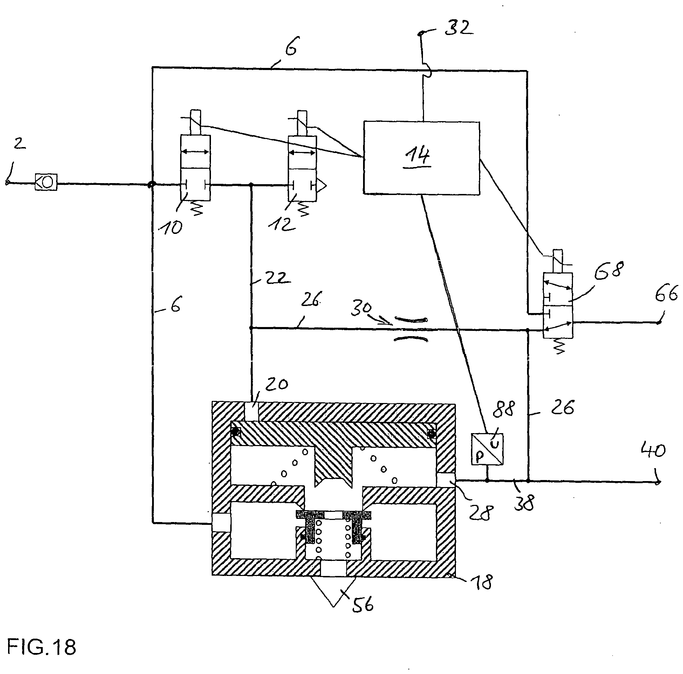

Nach Fig.18 bis Fig.24 kann daher wenigstens ein Drucksensor mit dem Anschluss für den wenigstens einen Federspeicherbremszylinder und/oder wenigstens ein Drucksensor mit dem Steuereingang des Relaisventils und/oder wenigstens ein Drucksensor mit dem Anschluss für das Anhängersteuerventil verbunden sein, der ein einen Ist-Druck repräsentierendes Signal in die elektronische Steuereinrichtung einsteuert.

Nach Fig.18 bis Fig.23 kann die elektronische Steuereinrichtung ausgebildet sein, dass sie auf der Basis eines einen Ist-Druck repräsentierenden Signals und eines einen Wert für einen Soll-Druck repräsentierenden Signals einen Soll-Ist-Abgleich im Rahmen einer Druckregelung durchführt und/oder eine Druck-Plausibilitätsprüfung und/oder eine Ermittlung des am Vorratsanschluss anstehenden Vorratsdrucks durchführt.

Falls beispielsweise nach Fig.18 ein Drucksensor am Arbeitsausgang des Relaisventils angeschlossen und damit auch mit dem Anschluss für den wenigstens einen Federspeicherbremszylinder bzw. mit dem Anschluss für das Anhängersteuerventil verbindbar bzw. verbunden ist, so kann dort der Ist-Druck und daraus der Betriebszustand des wenigstens einen Federspeicherbremszylinders (gelöst, zugespannt bzw. teilweise gelöst oder zugespannt) ermittelt werden. Das Gleiche gilt dann auch für den Betriebszustand der Anhängerbremsen, welcher aus dem Ist-Druck am Anschluss für das Anhängersteuerventil ermittelbar ist. Weiterhin wird ein Druckregelkreis realisiert, bei welchem die erste Magnetventileinrichtung in Verbindung mit dem Relaisventil die Stellglieder bilden.

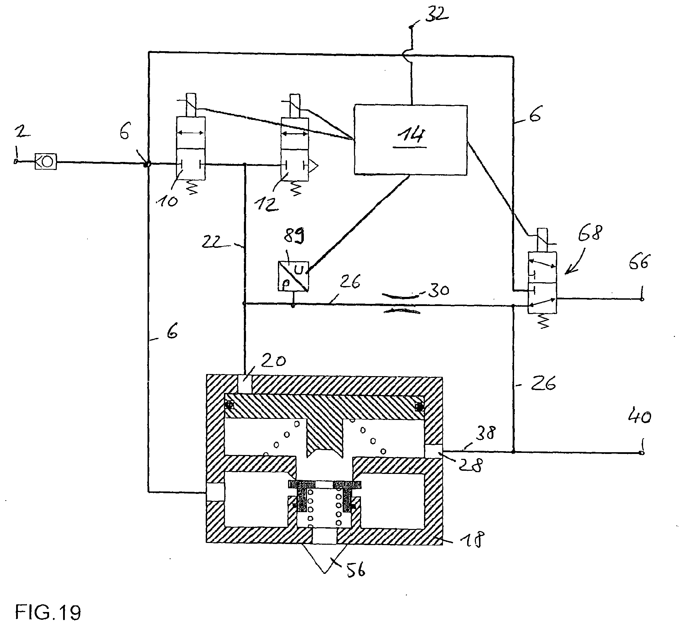

Falls gemäß Fig.19 ein Drucksensor mit dem Steuereingang des Relaisventils verbunden wird, so kann sehr schnell der von dem ersten und zweiten 2/2-Wegemagnetventil eingeregelte Ist-Druck ermittelt werden, was eine hohe Dynamik des Druckregelkreises ermöglicht. Darüber hinaus können auch der Betriebszustand des wenigstens einen Federspeicherbremszylinders (gelöst, zugespannt bzw. teilweise gelöst oder zugespannt) sowie der dort herrschende Ist-Bremsdruck unter Berücksichtigung des Übertragungsverhaltens des Relaisventils näherungsweise ermittelt werden. Das Gleiche gilt dann auch für den Betriebszustand der Anhängerbremsen.

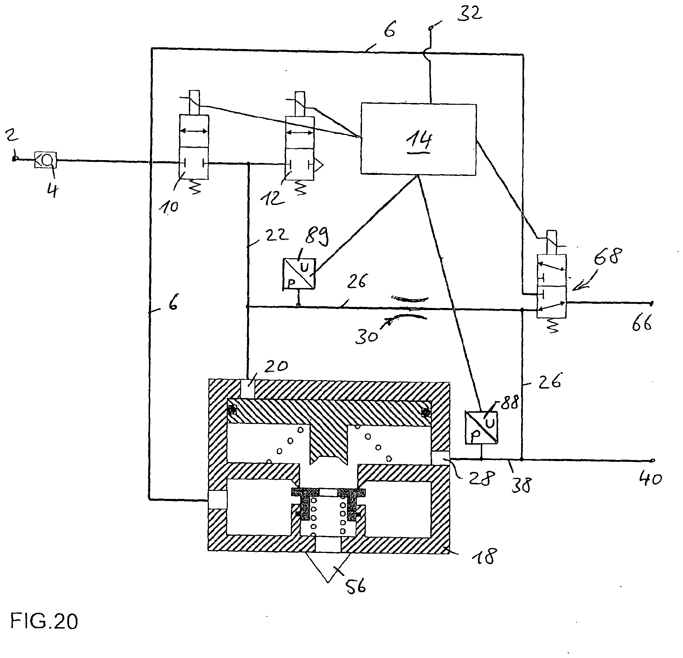

Falls gemäß Fig.20 ein erster Drucksensor mit dem Steuereingang und ein zweiter Drucksensor mit dem Arbeitsausgang des Relaisventils verbunden werden, ermöglicht dies eine Fehlererkennung mittels Plausibilitätsprüfung. Beispielsweise müssen die Ist-Druckwerte des ersten und zweiten Drucksensors je nach Betriebszustand unter Berücksichtigung von bestimmten Toleranzen in einer bestimmten Relation zueinander stehen. Dabei ist die Fehlererkennung oder Fehlerüberwachung schnell, vollständig und in mehreren Betriebszuständen durchführbar. Weiterhin ist eine schnellere Druckregelung möglich, als wenn nur ein Drucksensor am Arbeitsausgang des Relaisventils oder ein Drucksensor am Steuereingang des Relaisventils angeordnet ist.

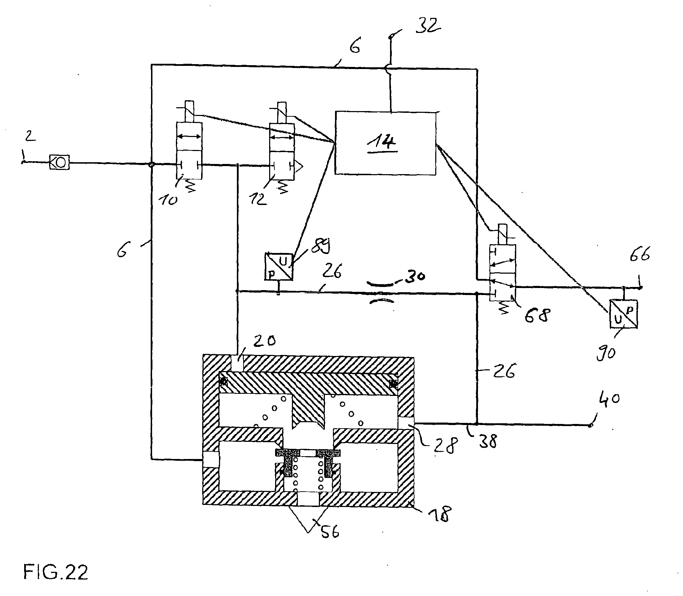

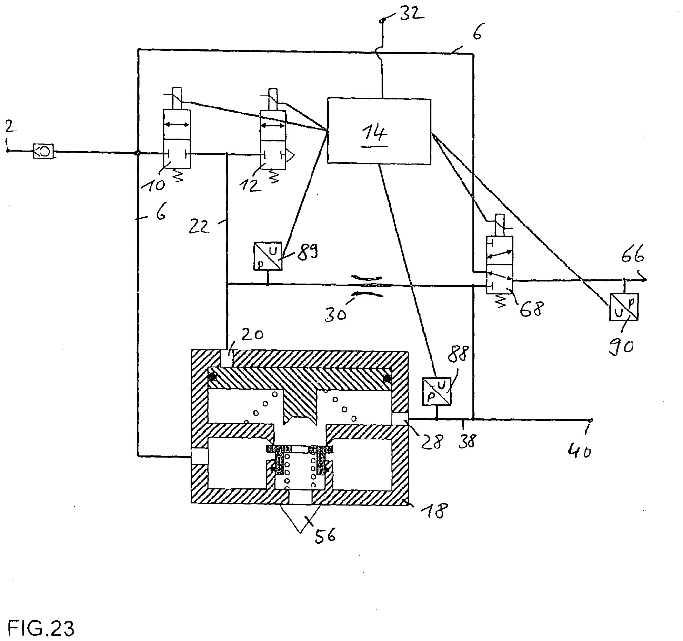

Falls gemäß Fig.22 und Fig.23 zusammen mit einem Drucksensor am Arbeitsausgang und/oder am Steuereingang des Relaisventils ein weiterer Drucksensor mit dem Anschluss des Anhängersteuerventils verbunden wird, so ist in mehreren Betriebszuständen eine direkte Messung des Vorratsdrucks am Vorratanschluss möglich, ohne dass der Betriebszustand "Fahren" eingestellt werden muss. Weiterhin ist auch eine schnelle Fehlererkennung mittels Plausibilitätsprüfung möglich. Beispielsweise müssen die Ist-Drücke der Drucksensoren gleiche Werte anzeigen, wenn die Magnetventile so geschaltet werden, dass eine Druckverbindung zwischen den Drucksensoren zustande kommt. Wie zuvor ist auch in mehreren Betriebszuständen eine Ermittlung des Vorratsdrucks möglich. Vorteilhafter Weise wird dadurch auch eine Druckregelung des Drucks am Anschluss für das Anhängersteuerventil möglich, wenn der Betriebszustand "Streckbremse vorgesehen ist, in dem zum Strecken der Zugfahrzeug-Anhängerkombination lediglich die Anhängerbremsen, nicht aber die Zugfahrzeugbremsen dosiert zugespannt werden.

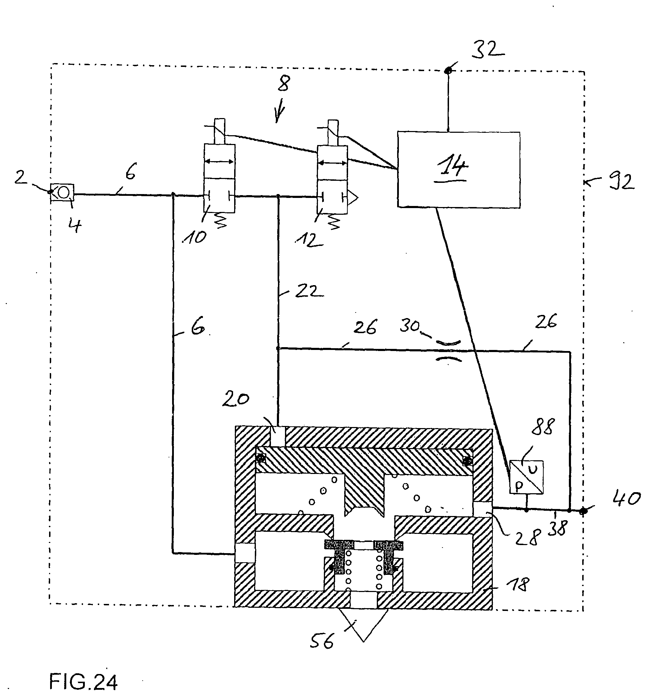

Gemäß einer Weiterbildung nach Fig.24 können wenigstens das Relaisventil, die erste Magnetventileinrichtung, das Rückschlagventil, die elektronische Steuereinrichtung, das wenigstens eine Drosselelement sowie der Vorratsanschluss, der Anschluss für den wenigstens einen Federspeicherbremszylinder und der Feststellbremssignalanschluss in einer Baueinheit ausgebildet sein. Dies resultiert in einer kompakten Baueinheit, welche als Grundmodul weiter ausbaufähig ist.

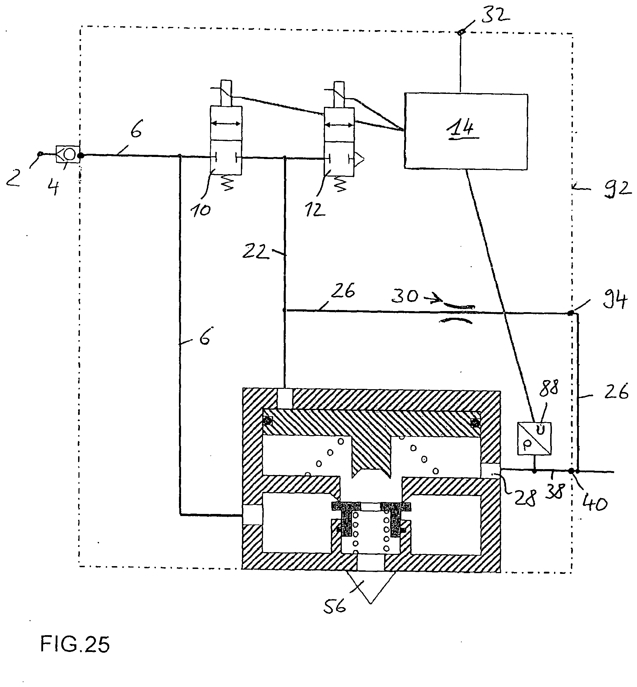

Vorzugsweise werden gemäß Fig.25 das Rückschlagventil und wenigstens ein Teil der Rückkopplungsleitung außerhalb der Baueinheit angeordnet. Dann kann als Baueinheit ein bei elektronisch geregelten Bremsen (EBS) üblicherweise verwendeter elektro-pneumatischer Modulator (EPM) verwendet und entsprechend modifiziert bzw. ergänzt werden.

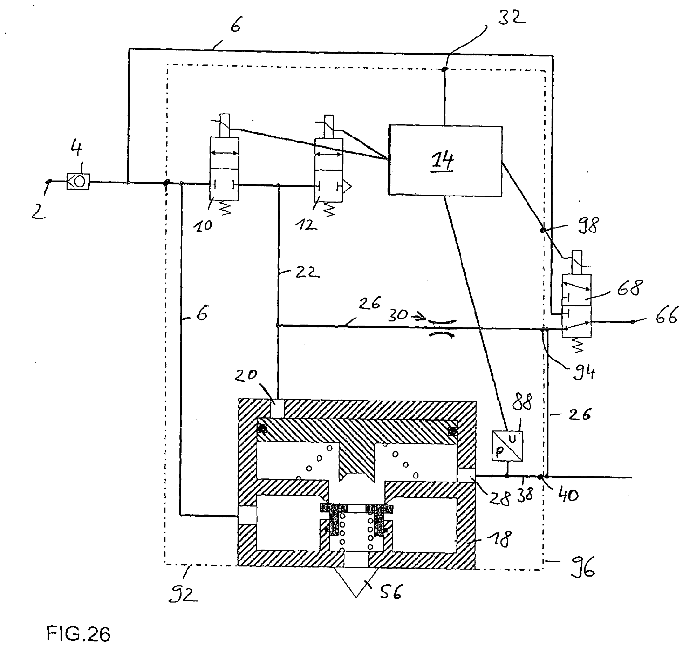

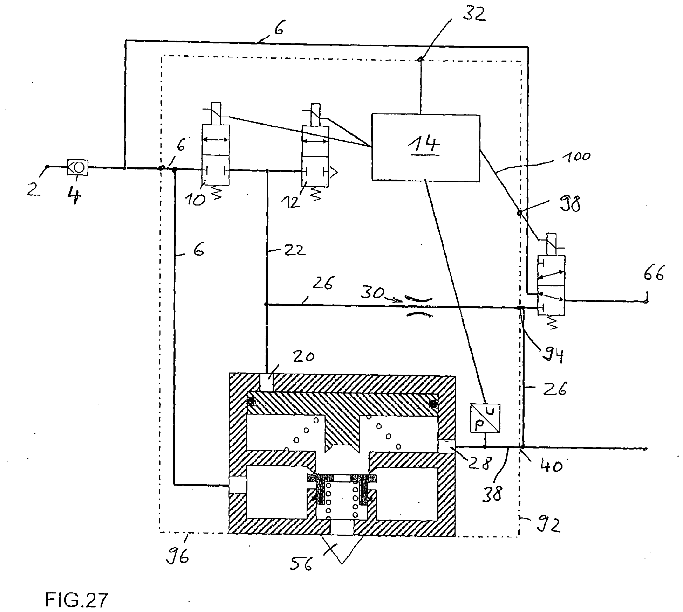

Zusätzlich kann gemäß Fig.26 und Fig.27 die zweite Magnetventileinrichtung außerhalb der Baueinheit angeordnet sein. Mit an die Baueinheit extern angeflanschter und verkabelter zweiter Magnetventileinrichtung zur Realisierung der Testfunktion und/oder zur Steuerung der Anhängerbremsen kann hierfür beispielsweise ein übliches und in hoher Stückzahl gefertigtes ASR-Magnetventil (Antischlupfregelungsventil) verwendet werden.

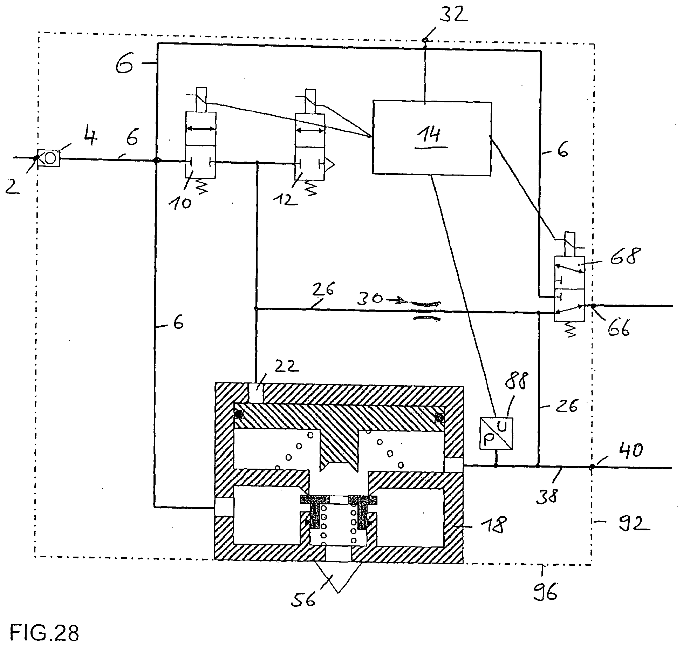

Alternativ hierzu kann gemäß Fig.28 die zweite Magnetventileinrichtung auch innerhalb der Baueinheit angeordnet werden, wodurch der Aufwand für externe Verrohrung und Verkabelung verringert wird.

Gemäß einer Weiterbildung nach Fig.29 und Fig.30 kann die vierte Magnetventileinrichtung, durch welche die Funktion "Streckbremsen" realisiert wird, außerhalb oder innerhalb der Baueinheit angeordnet sein.

Die Erfindung betrifft auch eine Bremsanlage eines Fahrzeugs, beinhaltend eine oben beschriebene elektro-pneumatische Parkbremssteuereinrichtung, insbesondere eine elektropneumatische Parkbremsanlage einer Zugfahrzeug-Anhängerkombination und insbesondere als elektronisch geregelte Parkbremsanlage (EPB).

Weitere die Erfindung verbessernde Maßnahmen werden nachstehend gemeinsam mit der Beschreibung eines Ausführungsbeispiels der Erfindung anhand der Zeichnung näher dargestellt.

Zeichnung

In der Zeichnung zeigt

Fig.1    ein schematisches Schaltbild einer bevorzugten Ausführungsform einer elektropneumatischen Parkbremssteuereinrichtung gemäß der Erfindung;

Fig.2    das Schaltbild von Fig.1 in einem Zustand, in dem die Federspeicherbremse dosiert gelöst wird;

Fig.3    das Schaltbild von Fig.1 in einem Zustand, in dem die Federspeicherbremse dosiert zugespannt wird;

Fig.4    das Schaltbild von Fig.1 in einem Zustand, in dem die Parkbremssteuereinrichtung in den Betriebszustand "Fahren" gebracht wird;

Fig.5    das Schaltbild von Fig.1 in einem Zustand, in dem die Parkbremssteuereinrichtung sich im stabilen Betriebszustand "Fahren" befindet;

Fig.6    das Schaltbild von Fig.1 in einem Zustand, in dem die Parkbremssteuereinrichtung in den Betriebszustand "Parken" gebracht wird;

Fig.7    das Schaltbild von Fig.1 in einem Zustand, in dem die Parkbremssteuereinrichtung sich im stabilen Betriebszustand "Parken" befindet;

Fig.8    ein schematisches Schaltbild einer weiteren Ausführungsform einer elektropneumatischen Parkbremssteuereinrichtung mit einem Stufenkolben;

Fig.9    ein schematisches Schaltbild einer Weiterbildung der Ausführungsform von Fig.8 mit einer Entlüftedrossel;

Fig.10   ein schematisches Schaltbild einer weiteren Ausführungsform einer elektropneumatischen Parkbremssteuereinrichtung mit einer zusätzlichen Magnetventileinrichtung zur Realisierung einer Anhängeransteuerung mit Testfunktion;

Fig.11   ein schematisches Schaltbild einer Abwandlung der Ausführungsform von Fig.10;

Fig.12   ein schematisches Schaltbild einer weiteren Ausführungsform einer elektropneumatischen Parkbremssteuereinrichtung mit einer zusätzlichen Magnetventileinrichtung zum Ein- und Ausschalten der Anhängersteuerfunktionen;

Fig.13   ein schematisches Schaltbild einer Abwandlung der Ausführungsform von Fig. 12;

Fig. 4   ein schematisches Schaltbild einer weiteren Ausführungsform einer elektropneumatischen Parkbremssteuereinrichtung mit Notbetätigung über ein Handventil;

Fig.15   ein schematisches Schaltbild einer weiteren Ausführungsform einer elektropneumatischen Parkbremssteuereinrichtung mit Notbetätigung über ein elektrisch betätigtes Ventil;

Fig.16   ein schematisches Schaltbild einer weiteren Ausführungsform einer elektropneumatischen Parkbremssteuereinrichtung mit Notbetätigung über ein elektrisch betätigtes Ventil und Doppelschalter;

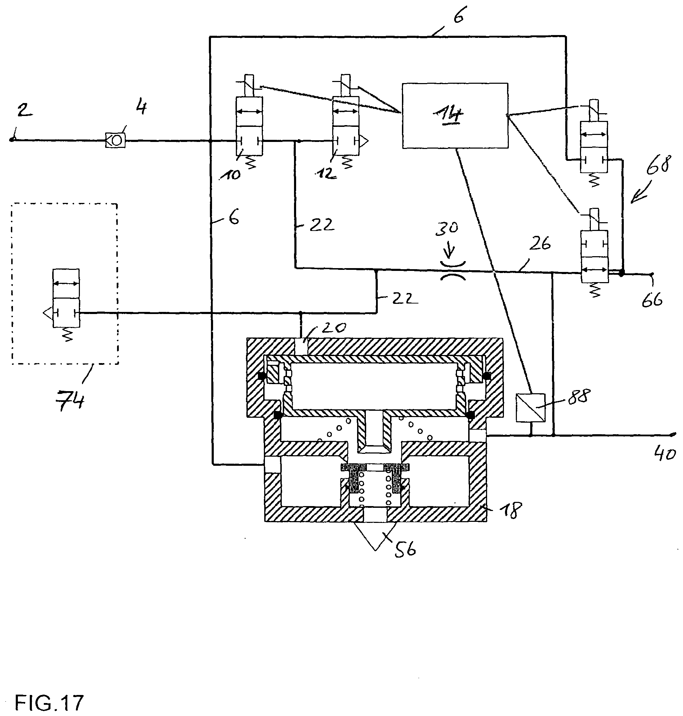

Fig.17   ein schematisches Schaltbild einer weiteren Ausführungsform einer elektropneumatischen Parkbremssteuereinrichtung mit Notbetätigungsventil;

Fig.18   ein schematisches Schaltbild einer weiteren Ausführungsform einer elektropneumatischen Parkbremssteuereinrichtung mit einem Drucksensor am Arbeitsausgang des Relaisventils;

7

Fig.19    ein schematisches Schaltbild einer weiteren Ausführungsform einer elektropneumatischen Parkbremssteuereinrichtung mit einem Drucksensor am Steuereingang des Relaisventils;

Fig.20    ein schematisches Schaltbild einer weiteren Ausführungsform einer elektropneumatischen Parkbremssteuereinrichtung mit zwei Drucksensoren;

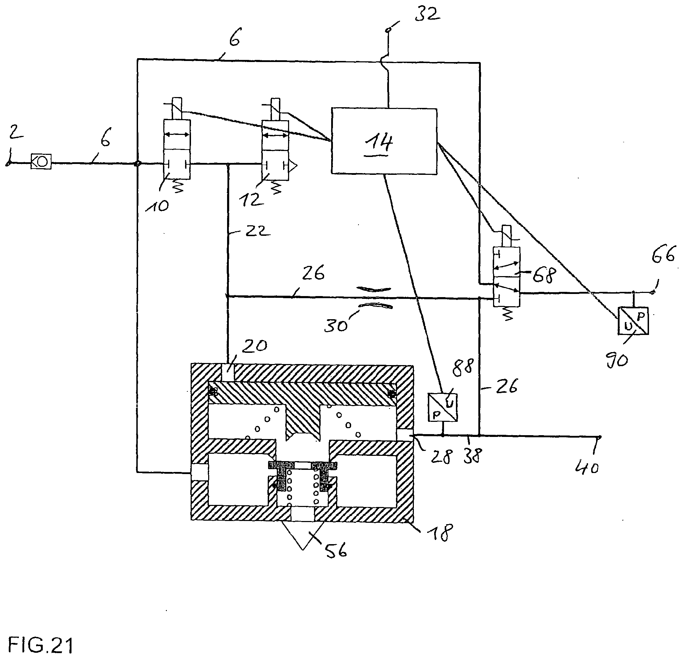

Fig.21    ein schematisches Schaltbild einer weiteren Ausführungsform einer elektropneumatischen Parkbremssteuereinrichtung mit zwei Drucksensoren;

Fig.22    ein schematisches Schaltbild einer weiteren Ausführungsform einer elektropneumatischen Parkbremssteuereinrichtung mit zwei Drucksensoren;

Fig.23    ein schematisches Schaltbild einer weiteren Ausführungsform einer elektropneumatischen Parkbremssteuereinrichtung mit drei Drucksensoren;

Fig.24    ein schematisches Schaltbild einer weiteren Ausführungsform einer elektropneumatischen Parkbremssteuereinrichtung als Baueinheit;

Fig.25    ein schematisches Schaltbild einer weiteren Ausführungsform einer elektropneumatischen Parkbremssteuereinrichtung als Baueinheit mit externen Bauteilen;

Fig.26    ein schematisches Schaltbild einer weiteren Ausführungsform einer elektropneumatischen Parkbremssteuereinrichtung als Baueinheit mit externen Bauteilen;

Fig.27    ein schematisches Schaltbild einer weiteren Ausführungsform einer elektropneumatischen Parkbremssteuereinrichtung als Baueinheit mit externen Bauteilen;

Fig.28    ein schematisches Schaltbild einer weiteren Ausführungsform einer elektropneumatischen Parkbremssteuereinrichtung als Baueinheit mit weiteren integrierten Bauteilen;

Fig.29    ein schematisches Schaltbild einer weiteren Ausführungsform einer elektropneumatischen Parkbremssteuereinrichtung mit einer zusätzlichen Magnetventileinrichtung zur Realisierung einer Streckbremsfunktion;

Fig.30    ein schematisches Schaltbild einer weiteren Ausführungsform einer elektropneumatischen Parkbremssteuereinrichtung mit einer integrierten zusätzlichen Magnetventileinrichtung zur Realisierung einer Streckbremsfunktion.

Beschreibung der Ausführungsbeispiele

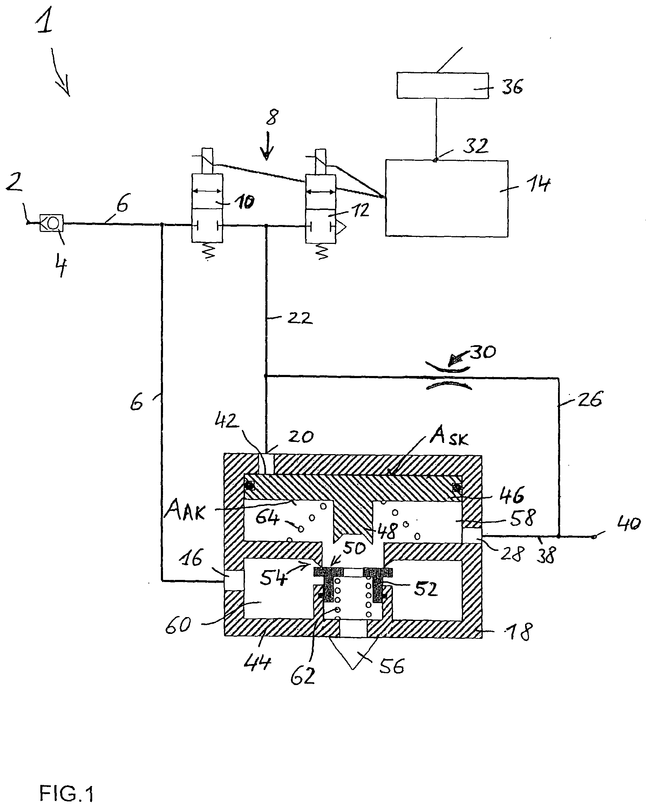

Fig.1 zeigt ein schematisches Schaltbild einer bevorzugten Ausführungsform einer elektropneumatischen Parkbremssteuereinrichtung 1 gemäß der Erfindung. Die elektropneumatischen Parkbremssteuereinrichtung 1 stellt bevorzugt eine Komponente einer elektropneumatischen Bremseinrichtung einer Zugfahrzeug-Anhängerkombination, insbesondere eines elektronisch geregelten Bremsanlage (EBS) dar und ist auf dem Zugfahrzeug angeordnet.

Die elektropneumatische Parkbremssteuereinrichtung 1 hat einen Vorratsanschluss 2, der über ein Rückschlagventil 4 abgesichert ist. Von dem Vorratsanschluss 2 erstreckt sich eine Vorratsleitung 6 einerseits zu einer ersten Magnetventileinrichtung 8 mit einem ersten 2/2-Wegemagnetventil 10 als Einlassventil und einem zweiten 2/2-Wegemagnetventil 12 als Auslassventil. Das erste 2/2-Wegemagnetventil 10 befindet sich wie das zweite 2/2-Wegemagnetventil 12 unbestromt in der gezeigten Sperrstellung, während beide Ventile 10, 12 bestromt in die Durchlassstellung umschalten und von einer elektronischen Steuereinrichtung 14 gesteuert werden.

Weiterhin ist auch ein Vorratseingang 16 eines Relaisventils über die Vorratsleitung 6 an den Vorratsanschluss 2 angeschlossen. Ein pneumatischer Steuereingang 20 des Relaisventils 18 ist über eine Steuerleitung 22 mit der Kombination aus Einlassventil 10 (erstes 2/2-Wegemagnetventil) und Auslassventil 12 (zweites 2/2-Wegemagnetventil) verbunden.

Im Einzelnen ist in der stromlosen Sperrstellung des zweiten 2/2-Wegemagnetventils 12 die Verbindung zwischen der Steuerleitung 22 bzw. dem Steuereingang 20 des Relaisventils 18 und einer Drucksenke 24 unterbrochen, während diese Verbindung in der bestromten Durchlassstellung geschaltet ist. In analoger Weise ist in der stromlosen Sperrstellung des ersten 2/2-Wegemagnetventils 10 die Verbindung zwischen der Steuerleitung 22 bzw. dem Steuereingang 20 des Relaisventils 18 und dem Vorratsanschluss 2 unterbrochen, während diese Verbindung in der bestromten Durchlassstellung geschaltet ist.

Darüber hinaus ist in eine Rückkopplungsleitung 26 zwischen einem Arbeitsausgang 28 des Relaisventils 18 und dem Steuereingang 20 des Relaisventils 18 ein Drosselelement 30 geschaltet, durch welches der Strömungsquerschnitt der Rückkopplungsleitung 26 verengt und mittels der Strömungsquerschnittsverengung der Luftmassenstrom zwischen dem Arbeitsausgang und dem pneumatischen Steuereingang des Relaisventils begrenzt bzw. gedrosselt wird.

Die beiden 2/2-Wegemagnetventile 10, 12 sind bevorzugt in ihre stromlose Stellung federbelastet vorgespannt und werden durch Bestromung mittels der Steuereinrichtung 14 umgeschaltet.

Der Arbeitsausgang 28 des Relaisventils 18 ist mittels einer Arbeitsleitung 38 mit einem Anschluss 40 für wenigstens einen Federspeicherbremszylinder verbunden.

An diesen Anschluss 40 sind bevorzugt zwei hier nicht gezeigte Federspeicherbremszylinder an der Hinterachse angeschlossen.

Die Steuerleitung 22 bzw. der Steuereingang 20 des Relaisventils 18 wird je nach Schaltstellung des ersten 2/2-Wegemagnetventils 10 und des zweiten 2/2-Wegemagnetventil 12 (Einlass-/Auslassmagnetventilkombination) be- oder entlüftet, so dass eine Be- oder Entlüftung durch Luftmengenverstärkung mittels des Relaisventils 18 eine entsprechende Be- oder Entlüftung des Arbeitsausgangs 28 und damit des Anschlusses 40 für den wenigstens einen Federspeicherbremszylinder nach sich zieht.

Das Relaisventil 18 ist in weitgehend bekannter Weise aufgebaut und beinhaltet eine über den Steuereingang 20 an die Steuerleitung angeschlossene Steuerkammer 42, einen die Steuerkammer 42 begrenzenden, in einem Gehäuse 44 beweglichen Relaiskolben 46 mit einem an dem Relaiskolben 46 bzw. an dessen Relaisventilkolbenstange ausgebildeten Ventilkörper 48, der mit einem Auslasssitz 50 an einer ebenfalls im Gehäuse 44 beweglich aufgenommenen Manschette 52 ein Auslassventil eines Doppelsitzventils ausbildet. Weiterhin beinhaltet das Relaisventil 18 einen am Gehäuse 44 ausgebildeten Einlasssitz 54, gegen welchen die Manschette 52 vorgespannt und mit diesem zusammen ein Einlassventil des Doppelsitzventils bildet. Die Manschette 52 weist außerdem eine mittige Durchgangsbohrung auf, die bei von der Manschette 52 abgehobenem Relaiskolben 46 eine Entlüftung 56 mit einer Arbeitskammer 58 verbindet, die mit dem Arbeitsausgang 28 verbunden ist, um diesen zu entlüften. Andererseits ist eine mit dem Vorratseingang 16 in Verbindung stehende Vorratskammer 60 bei von dem Einlasssitz 54 abgehobener Manschette 52 mit der Arbeitskammer 58 verbunden, um den Arbeitsausgang 28 zu belüften. Die Stellung des Relaiskolbens 46, der mit seinem Ventilkörper 48 die Manschette 52 nach unten drücken kann, um ihn vom Einlasssitz 54 abzuheben wird demnach durch den Druck am Steuereingang 20 bzw. in der Steuerkammer 42 bestimmt. Schließlich wird die Manschette 52 mittels einer Manschettenfeder 62 gegen den Einlasssitz 54 gedrängt. Außerdem drängt eine Relaiskolbenfeder 64 mit der Kraft $F_F$ den Relaiskolben 46 vom Auslasssitz 50 weg in Richtung Steuerkammer 42.

Die Schaltzustände der beiden 2/2-Wegemagnetventile 10, 12 werden durch die Steuereinrichtung 14 bestimmt, insbesondere in Abhängigkeit von den an dem Feststellbremssignalanschluss 32 anstehenden Feststellbremssignalen. Hierzu ist der Feststellbremssignalgeber 36 ausgebildet, dass er betätigungsabhängig Feststellbremssignale aussteuert, welche die weiter unter beschriebenen Betriebszustände repräsentieren.

Die Steuereinrichtung kann über den Feststellbremssignalanschluss oder über einen weiteren Signalanschluss auch mit einem in den Figuren nicht dargestellten Fahrzeugdatenbus verbunden sein, über den digitale Daten von anderen Steuereinrichtungen empfangen und an diese gesendet werden können. Anstatt durch den oder zusätzlich zu dem durch den Fahrer manuell bedienbaren Feststellbremssignalgeber 36 können Feststellbremssignale auch von einer weiteren Steuereinrichtung beispielsweise über einen Fahrzeugdatenbus in die Steuereinrichtung 14 eingesteuert werden, beispielsweise von einem Fahrerassistenzsystem wie beispielsweise von einem Anfahrhilfesystem an Steigungen. Anhand von über einen solchen Fahrzeugdatenbus empfangenen Signalen können Feststellbremssignale dann von der Steuereinrichtung 14 selbst generiert werden. Beispielsweise kann die Parkbremse automatisch zugespannt werden, wenn das Fahrzeug zum Stillstand gekommen ist, oder auch automatisch gelöst werden, wenn erkannt wird, dass das Fahrzeug losfahren soll.

Im Einzelnen beaufschlagt der Druck $p_{SK}$ in der Steuerkammer 42 die dieser zugewandte Fläche $A_{SK}$ des Relaiskolbens 46, der Arbeitskammerdruck $p_{AK}$ wirkt auf die dieser zugewandten Fläche $A_{AK}$. Die der Steuerkammer 42 zugewandte Fläche $A_{SK}$ des Relaiskolbens 46 ist größer als die der Arbeitskammer 58 zugewandte Fläche $A_{AK}$.

Auf den Relaiskolben 46 wirken also folgende Kräfte:

$$\text{Aus Richtung Steuerkammer:} \quad F_{st} = p_{SK}A_{SK}$$
$$\text{Aus Richtung Arbeitskammer:} \quad F_{AK} = F_F + p_{AK}A_{AK}$$

Wird die Manschette 52 nach unten bewegt, so muss zusätzlich die Kraft $F_{F2}$ der Manschettenfeder 62 überwunden werden. Schließlich müssen noch die Reibkräfte $F_{Reibung}$ der Dichtungen und Führungen von Relaiskolben 46 und Manschette 52 überwunden werden, wenn der Relaiskolben 46 bewegt werden soll.

Vor diesem Hintergrund ist die Funktionsweise der elektromagnetischen Parkbremssteuereinrichtung 1 wie folgt:

In dem in Fig.1 gezeigten Grundzustand der elektropneumatischen Parkbremssteuereinrichtung 1 sind sowohl das erste 2/2-Wegemagnetventil 10 als auch das zweite 2/2-Wegemagnetventil 12 unbestromt, so dass über das Drosselelement 30 der Steuereingang 20 stets mit dem Arbeitsausgang 28 des Relaisventils 18 verbunden ist. Damit ist die Rückkopplung stabil und es kann keine Druckluft vom Vorratsanschluss 2 zum Steuereingang 20 des Relaisventils 18 gelangen bzw. von diesem zur Drucksenke 24 entweichen. Damit wird auch der gerade herrschende Druck an dem Anschluss 40 für den wenigstens einen Federspeicherbremszylinder und dadurch auch dessen Zuspann- bzw. Lösestellung konstant gehalten.

Soll nun auf ein entsprechendes Feststellbremssignal hin der Druck an dem Anschluss 40 für den wenigsten

einen Federspeicherbremszylinder erhöht werden, beispielsweise im Betriebszustand "Hilfsbremse", so wird gemäß Fig.2 durch Bestromung des ersten 2/2-Wegemagnetventils 10 dieses in Durchgangsstellung geschaltet und dadurch der Druck in der Steuerkammer 42 des Relaisventils 18 erhöht. Dies erfolgt insbesondere durch Pulsen des ersten 2/2-Wegemagnetventils 10.

Wenn dann gilt:

$$p_{SK}A_{SK} > F_F + F_{F2} + p_{AK}A_{AK} + F_{Reibung},$$

so bewegt sich der Relaiskolben 46 nach unten, öffnet den Einlasssitz 54 des Doppelsitzventils und lässt Vorratsdruck in die Arbeitskammer 58 einströmen. Wenn dann gilt:

$$p_{SK}A_{SK} + F_{Reibung} = F_F + p_{AK}A_{AK}$$

bewegt sich der Relaiskolben 46 zurück bis in eine Neutralstellung, in welcher Einlasssitz 54 und Auslasssitz 50 des Doppelsitzventils geschlossen sind.

Soll demgegenüber auf ein entsprechendes Feststellbremssignal hin gemäß Fig.3 ein geringerer Druck an dem Anschluss 40 für den wenigstens einen Federspeicherbremszylinder eingeregelt werden, beispielsweise im Betriebszustand "Hilfsbremse", so wird vorzugsweise durch Pulsen des zweiten 2/2-Wegemagnetventils 12 der Steuerdruck in der Steuerkammer 42 abgesenkt, bis gilt:

$$p_{SK}A_{SK} + F_{Reibung} < F_F + p_{AK}A_{AK}.$$

Dann bewegt sich der Relaiskolben 46 in Richtung Steuerkammer 42 und entlüftet die Arbeitskammer 58 über den Auslasssitz 50 des Doppelsitzventils, bis wieder Kräftegleichgewicht herrscht, worauf der Relaiskolben 46 wieder in Neutralstellung übergeht.

Da während der oben beschriebenen Drucksteuerung bzw. Druckregelung in der Steuerkammer 42 und in der Arbeitskammer 58 im Allgemeinen nicht die gleichen Drücke herrschen und über das Drosselelement 30 immer ein gewisse Luftmenge in Richtung des niedrigeren Drucks strömt, wird vorzugsweise daraus resultierende Anteil der Druckänderung in der Steuerkammer 42 durch entsprechende gepulste Steuerung des ersten 2/2-Wegemagnetventils 10 bzw. des zweiten 2/2-Wegemagnetventils 12 ausgeglichen. Dies gilt sowohl für Drucksteigern, Druckverringern als auch für Druckhalten, wenn nicht genau Vorratsdruck oder Atmosphärendruck am Anschluss 40 für den wenigstens einen Federspeicherbremszylinder herrschen sollen.

Zum Herstellen des Betriebszustands "Fahren" gemäß Fig.4 auf ein entsprechendes Feststellbremssignal hin wird das erste 2/2-Wegemagnetventil 10 über längere Zeit bestromt. Dadurch wird die Steuerkammer 42 belüftet, auch wenn zunächst ein geringer Teil der vom ersten 2/2-Wegemagnetventil 10 zur Steuerkammer geleiteten Luft durch das Drosselelement (30) in die Arbeitskammer abströmt.

Wenn gilt:

$$p_{SK}A_{SK} > F_F + F_{F2} + F_{Reibung}$$

steigt auch der Druck in der Arbeitskammer 58, solange gilt:

$$p_{SK}A_{SK} > F_F + F_{F2} + p_{AK}A_{AK}$$

Da die Fläche $A_{SK}$ größer als die Fläche $A_{AK}$ ist, steigt in der Arbeitskammer 58 der Druck schneller als in der Steuerkammer 42 bis er ihn schließlich überschreitet. Dann strömt über die Rückkopplungsleitung 26 und das Drosselelement 30 Luft von der Arbeitskammer 58 in die Steuerkammer 42 über, so dass sich der Prozess selbst verstärkt.

Dadurch wird der Relaiskolben 46 stabil in seine untere, zur Arbeitskammer 58 weisende Endposition gedrängt, sodass er permanent den Einlasssitz 54 des Doppelsitzventils öffnet und die Arbeitskammer 58 mit dem Vorratsanschluss 2 verbindet.

Da nun die Steuerkammer 42 über das Drosselelement 30, die Arbeitskammer 58 und den Einlasssitz 54 permanent mit Vorratsdruck versorgt wird, kann auch das erste 2/2-Wegemagnetventil 10 entstromt werden, um es in seine Sperrstellung zu schalten. Es gilt dann:

$$p_{SK} = p_{AK} = p_{Versorgung}$$

Der stabile Betriebszustand "Fahren" ist in Fig. 5 gezeigt, in dem der Relaiskolben 46 in der Belüftungsstellung bleibt und es gilt:

$$p_{Versorgung} A_{SK} + F_{Reibung} > F_F + F_{F2} + p_{Versorgung} A_{AK}$$

Sinkt in der Stellung "Fahren" der Vorratsdruck $p_{Versorgung}$ unter einen bestimmten Schwellwert ab, z.B. weil bei ausgeschaltetem Motor geringe Undichtigkeiten hinter Anschluss 40 nicht mehr nachgefördert werden, so überwiegt irgendwann die von der Relaiskolbenfeder 64 auf den Relaiskolben 46 wirkende Kraft und der Einlasssitz 54 wird geschlossen, der Auslasssitz 50 geöffnet und der Druck in der Arbeitskammer 58 entlüftet. Da das Drosselelement 30 die Steuerkammer 42 mit der Arbeitskammer 58 verbindet wird nun auch die Steuerkammer 42 entlüftet, wodurch die Federkräfte der Relaiskolbenfeder 64 nun noch mehr überwiegen. Die Parkbremse geht dann automatisch in die stabile Parkstellung.

Zum Herstellen des Betriebszustands "Parken" gemäß Fig.6 wird das zweite 2/2-Wegemagnetventil 12 über eine gewisse Zeitdauer bestromt. Dadurch wird die Steuerkammer 42 entlüftet, bis dort Atmosphärendruck herrscht.

Wenn gilt:

$$p_{SK} A_{SK} + F_{Reibung} < F_F + p_{AK} A_{AK}$$

bewegt sich der Relaiskolben 46 in Richtung Steuerkammer 42 und entlüftet die Arbeitskammer 58 über den Auslasssitz 50 des Doppelsitzventils.

Da die Fläche $A_{SK}$ deutlich größer ist als die Fläche $A_{AK}$, ist der Druck in der Arbeitskammer 58 zunächst noch höher als der in der Steuerkammer 42, weshalb Luft zunächst noch von der Arbeitskammer 58 über das Drosselelement 30 in Richtung Steuerkammer 42 strömt. Da jedoch der Öffnungsströmungsquerschnitt des zweiten 2/2-Wegemagnetventils 12 größer ist als der Strömungsquerschnitt des Drosselelements 30 an der Drosselstelle sinkt der Druck in der Steuerkammer 42 dennoch.

Da wegen der Flächenverhältnisse der Druck $p_{AK}$ in der Arbeitskammer schneller sinkt als der Druck $p_{SK}$ in der Steuerkammer wird Ersterer wegen der Relaiskolbenfeder 64 irgendwann kleiner als Letzterer. Nun dreht sich die Strömungsrichtung durch das Drosselelement 30 um und es strömt Luft von der Steuerkammer 42 zur Arbeitskammer 58, so dass sich der Prozess selbst verstärkt, bis überall Atmosphärendruck herrscht.

Die den Relaiskolben 46 belastende Relaiskolbenfeder 64 sorgt dafür, dass er sich bis in seine obere Endstellung bewegt und dort verharrt, wodurch der Auslasssitz 50 permanent vollständig geöffnet ist. Da nun die Steuerkammer 42 über das Drosselelement 30, die Arbeitskammer 58 und den geöffneten Auslasssitz 50 permanent mit Atmosphäre verbunden ist, kann das zweite 2/2-Wegemagnetventil 12 entstromt und damit in seine Sperrstellung gebracht werden.

Den stabilen Betriebszustand "Parken" zeigt Fig.7.

Bei den nachfolgend beschriebenen Ausführungsformen sind gleiche oder gleich wirkende Bauteile und Komponenten mit Bezug auf die voranstehend beschriebene Ausführungsform mit den gleichen Bezugszahlen gekennzeichnet.

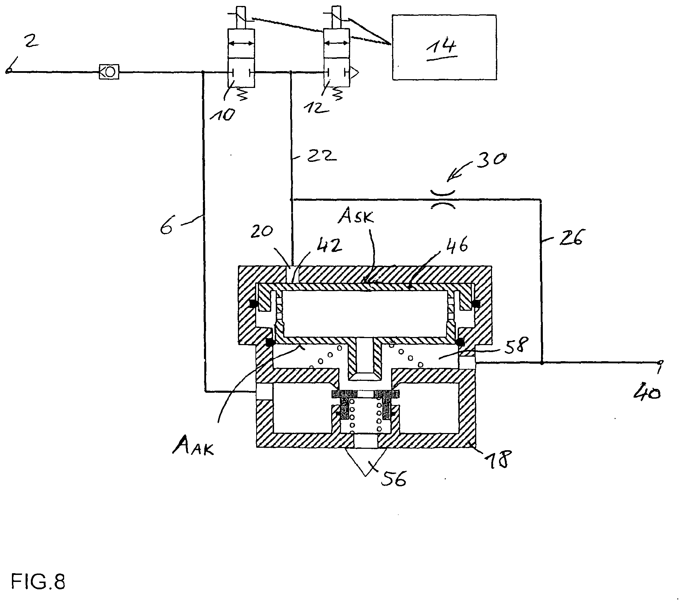

Bei der oben beschriebenen Ausführungsform ist die der Steuerkammer 42 zugewandte Wirkfläche $A_{SK}$ des Relaiskolbens 46 bereits um die Fläche, die vom Auslasssitz umspannt wird, größer als die der Arbeitskammer 58 zugewandte Wirkfläche $A_{AK}$. Wenn der Unterschied in den Wirkflächen noch größer sein soll, so kann gemäß der Ausführungsformen von Fig.8 und Fig.9 auch ein Stufenkolben als Relaiskolben 46 verwendet werden, bei dem die Wirkfläche $A_{SK}$ der der Steuerkammer 42 zugewandten Kolbenstufe größer ist als die Wirkfläche $A_{AK}$ der der Arbeitskammer zugewandten Wirkfläche Kolbenstufe, wobei der Raum zwischen den Dichtungen der beiden Kolbenstufen mit Atmosphäre verbunden ist. Auf diese Weise wird die Wirkfläche $A_{SK}$ für den Druck $p_{SK}$ in der Steuerkammer 42 gegenüber der Wirkfläche $A_{AK}$ für den Druck $p_{AK}$ in der Arbeitskammer 58 wesentlich vergrößert.

Um in der Stellung "Parken" eventuell auftretende, leichte Undichtigkeiten gegenüber einem vorratsdruckführenden Bereich und damit ein ungewolltes Lösen der Parkbremse mit hoher Sicherheit zu vermeiden, kann gemäß der Ausführungsform von Fig. 9 ein weiteres Drosselelement 65 vorzugsweise am Relaiskolben 46 so angeordnet werden, dass es die Steuerkammer 42 mit einem kleinen Querschnitt zur Drucksenke 56 hin entlüftet, wenn sich der Relaiskolben 46 in einer Stellung befindet, in welcher er den Einlasssitz 50 des Doppelsitzventils noch nicht oder nicht vollständig geöffnet hat.

Dies kann beispielsweise gemäß Fig.9 dadurch realisiert werden, dass eine Relaiskolbendichtung 67 gehäusefest angebracht ist und z.B. der Relaiskolben 46 das weitere Drosselelement 65 in seiner Mantelwandung als Durchgangsbohrung aufweist, derart, dass das weitere Drosselelement 65 mit der Relaiskolbendichtung 67 zusammen wirken und stellungsabhängig die Steuerkammer 42 mit der Entlüftung 56 verbinden oder diese Verbindung sperren kann. Daher wirkt das weitere Drosselelement 65 mit der Relaiskolbendichtung 67 derart zusammen, dass je nach Position des Relaiskolbens 46 bzw. des Stufenkolbens 46a eine gedrosselte Verbindung zwischen der Drucksenke 56 (Atmosphäre) und der Steuerkammer 42 zustande kommt oder unterbrochen wird, wie anhand von Fig.9 leicht vorstellbar ist.

Falls mittels der elektropneumatischen Parkbremssteuereinrichtung 1 eine Ansteuerung eines Anhängersteuerventils (ASV) vorgesehen ist, so kann diese wie in den Ausführungsformen nach Fig.10 und Fig.11 dargestellt so ausgeführt werden, dass der an dem Anschluss 40 für den wenigstens einen Federspeicherbremszylinder anstehende Druck gleichzeitig zu einem Anschluss 66 für ein Anhängersteuerventil geleitet wird. In diesem Fall muss der Fahrer jedoch die Möglichkeit haben, bei eingelegter Parkbremse den Anschluss 66 für das Anhängersteuerventil zu belüften, damit die Bremsen des Anhängers lösen und der Fahrer testen kann, ob die Federspeicherbremse des Zugfahrzeugs alleine die Zugfahrzeug-Anhänger-Kombination im Stillstand halten kann ("Testfunktion"). Diese "Testfunktion" wird durch eine zweite, von der elektronischen Steuereinrichtung 14 steuerbare Magnetventileinrichtung 68 realisiert, die vorzugsweise zwei 2/2-Wegemagnetventile gemäß Fig.10 oder ein einziges 3/2-Wegemagnetventil gemäß Fig.11 beinhaltet bzw. gebildet wird. Das Magnetventil 68 bzw. die Magnetventile 68 sind bevorzugt so geschaltet, dass sie im unbestromten Zustand den Anschluss 66 für das Anhängersteuerventil mit dem Anschluss 40 für den wenigstens einen Federspeicherbremszylinder verbinden und im bestromten Zustand mit dem Vorratsanschluss 2. Mit anderen Worten ist die zweite Magnetventileinrichtung 68 ausgebildet, dass sie entweder den Vorratsanschluss 2 mit dem Anschluss 66 für das Anhängersteuerventil oder den Arbeitsausgang 28 des Relaisventils 18 mit dem Anschluss 66 für das Anhängersteuerventil verbindet.

Wenn der Anhänger bei voll zugespannter Parkbremse und abgeschalteter Stromversorgung nicht mitbremsen soll, so muss der Anschluss 66 für das Anhängersteuerventil bei diesen Betriebsbedingungen mit Vorratsdruck verbunden sein. Wird jedoch der Druck am Anschluss 66 für das Anhängersteuerventil gerade geregelt, beispielsweise im Rahmen der Funktion "Hilfsbremsen", so soll der Anhänger mitbremsen. Diese Funktionalität wird in einer weiteren Ausführungsvariante bevorzugt ebenfalls mittels der zweiten Magnetventileinrichtung 68 beispielsweise in Form zweier 2/2-Wegemagnetventile nach Fig.12 oder eines einzigen 3/2-Wegemagnetventils nach Fig.13 realisiert. Diese Magnetventile 68 sind jedoch gegenüber Fig.10 und Fig.11 umgekehrt verschaltet, so dass im stromlosen Zustand Vorratsdruck am Anschluss 66 für das Anhängersteuerventil ansteht und während einer Druckregelung durch Bestromung dieser Magnetventile 68 der Anschluss 66 für das Anhängersteuerventil mit dem Anschluss 40 für den wenigstens einen Federspeicherbremszylinder verbunden ist. Die zweite Magnetventileinrichtung 69 nach Fig.12 und Fig.13 ist dann so ausgebildet, dass sie stromlos den Vorratsanschluss 2 mit dem Anschluss 66 für das Anhängersteuerventil verbindet. Andererseits verbindet die zweite Magnetventileinrichtung 68 bestromt den Arbeitsausgang 28 des Relaisventils 18 mit dem Anschluss 66 für das Anhängersteuerventil.

Wenn auch bei durch Ausfall oder Abschalten (Zündung "Aus") deaktivierter elektrischer Energieversorgung die Feststellbremse noch zuspannbar sein soll, so kann beispielsweise über ein manuell betätigbares Ventil 72a oder von einer gegenüber der vorhandenen Bordenergieversorgung (z.B. Batterie) zusätzlichen elektrischen Energieversorgung 73 (z.B. weitere Batterie) versorgtes Magnetventil 72b der Steuereingang 20 des Relaisventils 18 entlüftet werden.

Demzufolge kann gemäß der Ausführungsformen von Fig. 14 bis Fig. 17 eine dritte Ventileinrichtung 74 vorgesehen sein, mit beispielsweise einem manuell (72a) oder elektrisch (72b) steuerbaren Ventil 72a, 72b mit einer Durchlassstellung und einer Sperrstellung, welches in der Durchlassstellung den Steuereingang 20 des Relaisventils 18 mit einer Drucksenke 84 verbindet oder in der Sperrstellung diese Verbindung sperrt.

Gemäß Fig.14 kann beispielsweise ein manuelles Ventil 72a oder gemäß Fig.15 und Fig.16 ein Magnetventil 72b verwendet werden, welches mittels eines elektrischen Schalters 75 betätigt wird, der es mit der zusätzlichen elektrischen Energiequelle 73 verbindet. Um zu verhindern, dass das Magnetventil 72b durch einen Fehler in der Verkabelung versehentlich bestromt wird, kann gemäß Fig.16 ein Schalter mit doppeltem Schaltkontakt für den Pluspol und Masse verwendet werden.

Nach den in Fig.18 bis Fig.23 gezeigten Ausführungsformen ist die elektronische Steuereinrichtung 14 ausgebildet, dass sie auf der Basis eines einen Ist-Druck repräsentierenden Signals und eines einen Wert für einen Soll-Druck repräsentierenden Feststellbremssignals einen Soll-Ist-Abgleich im Rahmen einer Druckregelung und/oder eine Druck-Plausibilitätsprüfung und/oder eine Ermittlung des am Vorratsanschluss 2 anstehenden Vorratsdrucks durchführt.

Falls beispielsweise nach der Ausführungsform von Fig.18 ein Drucksensor 88 am Arbeitsausgang 28 des Relaisventils 18 angeschlossen und damit auch mit dem Anschluss 40 für den wenigstens einen Federspeicherbremszylinder bzw. mit dem Anschluss 66 für das Anhängersteuerventil verbindbar bzw. verbunden ist, so kann dort der Ist-Druck und daraus der Betriebszustand des wenigstens einen Federspeicherbremszylinders (gelöst, zugespannt bzw. teilweise gelöst oder zugespannt) ermittelt werden. Das Gleiche gilt dann auch für den Betriebszustand der Anhängerbremsen, welcher aus dem Ist-Druck am Anschluss 66 für das Anhängersteuerventil ermittelbar ist, wenn sich die zweite Magnetventileinrichtung 68 in der Stellung befindet, in welcher der Anschluss 66 für das Anhängersteuerventil mit dem Anschluss 40 für den wenigstens einen Federspeicherbremszylinder verbunden ist. Weiterhin wird ein Druckregelkreis realisiert, bei welchem die erste Magnetventileinrichtung 8 in Verbindung mit dem Relaisventil 18 die Stellglieder bilden. Wenn ausschließlich der Drucksensor 88 verwendet wird, erkennt jedoch der Druckregler Druckabweichungen erst, wenn sich bereits eine Abweichung im Arbeitsausgangsdruck des Relaisventils eingestellt hat. Dies kann zu erhöhtem Druckluftverbrauch führen.

Falls gemäß Fig.19 ein Drucksensor 89 mit dem Steuereingang 20 des Relaisventils verbunden wird, so kann sehr schnell der von dem ersten und zweiten 2/2-Wegemagnetventil 10, 12 eingeregelte Ist-Druck ermittelt werden, was in einer hohen Dynamik des Druckregelkreises resultiert. Darüber hinaus können auch der Betriebszustand des wenigstens einen Federspeicherbremszylinders (gelöst, zugespannt bzw. teilweise gelöst oder zugespannt) sowie der dort herrschende Ist-Bremsdruck ermittelt werden, allerdings mit einer geringeren Genauigkeit gegenüber der Verwendung des Drucksensors 88, da Ansprechverhalten und Hysterese des Relaisventils als Fehler eingehen. Das Gleiche gilt dann auch für den Betriebszustand der Anhängerbremsen. Besonders vorteilhaft bei Verwendung des Drucksensors 89 ist, dass der Druckregler Druckabweichungen in der Steuerkammer so fein ausregeln kann, dass sie noch nicht zu einer Druckabweichung am Arbeitsausgang des Relaisventils führen.

Falls gemäß Fig.20 ein erster Drucksensor 88 mit dem Arbeitsausgang 28 und ein zweiter Drucksensor 89 mit dem Steuereingang des Relaisventils 18 verbunden werden, ermöglicht dies auch eine Fehlererkennung mittels Plausibilitätsprüfung. Beispielsweise müssen die Ist-Druckwerte des ersten und zweiten Drucksensors 88, 89 je nach Betriebszustand unter Berücksichtigung von bestimmten Toleranzen in einer bestimmten Relation zueinander stehen. Dabei ist die Fehlererkennung oder Fehlerüberwachung schnell, vollständig und in mehreren Betriebszuständen durchführbar. Weiterhin ergibt sich eine schnellere Druckregelung mit weniger Druckluftverbrauch als wenn nur ein Drucksensor 88 am Arbeitsausgang 28 des Relaisventils 18 und eine genauere Druckregelung des Arbeitsausgangsdrucks als wenn nur ein Drucksensor 89 am Steuereingang 20 des Relaisventils 18 angeordnet ist.

Bei der Ausführungsform von Fig.21 sind ein erster Drucksensor 88 mit dem Arbeitsausgang 28 des Relaisventils 18 und ein weiterer Drucksensor 90 mit dem Anschluss 66 für das Anhängersteuerventil verbunden, so dass neben einer Druckregelung auch eine Plausibilitätsprüfung möglich ist. Denn der Druck an dem Anschluss 66 für das Anhängersteuerventil muss dem Druck an dem Anschluss 40 für den wenigstens einen Federspeicherbremszylinder entsprechen, wenn die zweite Magnetventileinrichtung 68 eine entsprechende Verbindung schaltet. Hat die zweite Magnetventileinrichtung 68 eine Verbindung zwischen Vorratsdruck und Anschluss 66 geschaltet, kann mit dem Drucksensor 90 der Vorratsdruck gemessen werden.

Bei der Ausführungsform nach Fig.22 sind ein Drucksensor 89 mit dem Steuereingang 20 des Relaisventils 18 und ein weiterer Drucksensor 90 mit dem Anschluss 66 für das Anhängersteuerventil verbunden. Da bei einer Druckregelung, beispielsweise zum Zwecke einer Hilfsbremsung, die zweite Magnetventileinrichtung 68 so geschaltet ist, dass der Anschluss 66 mit dem Arbeitsausgang 28 des Relaisventils verbunden ist, ergeben sich in diesem Betriebszustand die gleichen Vorteile wie im Falle der Ausführungsform gemäß Fig.20. denn der Druck an dem Anschluss 66 für das Anhängersteuerventil muss dem Druck an dem Anschluss 40 für den wenigstens einen Federspeicherbremszylinder entsprechen, wenn die zweite Magnetventileinrichtung 68 eine entsprechende Verbindung schaltet. Hat die zweite Magnetventileinrichtung 68 eine Verbindung zwischen Vorratsdruck und Anschluss 66 geschaltet, kann mit dem Drucksensor 90 der Vorratsdruck gemessen werden.

Falls gemäß Fig.23 zusammen mit einem ersten Drucksensor 88 am Arbeitsausgang 28 einem zweiten Drucksensor 89 am Steuereingang 20 des Relaisventils 18 ein weiterer Drucksensor 90 mit dem Anschluss 66 für das Anhängersteuerventil verbunden wird, so ist in mehreren Betriebszuständen eine direkte Messung des Vorratsdrucks am Vorratanschluss möglich, wenn die dritte Magnetventileinrichtung ohne dass der Betriebszustand "Fahren" eingestellt werden muss. Weiterhin ist auch eine schnelle Fehlererkennung mittels Plausibilitätsprüfung möglich. Beispielsweise müssen die Ist-Drücke der Drucksensoren 88 und 90 gleiche Werte anzeigen, wenn die zweite Magnetventileinrichtung 68 so geschaltet ist, dass eine Druckverbindung zwischen den Drucksensoren 88, 90 zustande kommt. Wie zuvor ist auch in mehreren Betriebszuständen eine Ermittlung des Vorratsdrucks möglich. Vorteilhafter Weise wird dadurch auch eine Druckregelung des Drucks am Anschluss 66 für das Anhängersteuerventil möglich, wenn der Betriebszustand "Streckbremse" vorgesehen ist (Fig.29, Fig.30), in dem zum Strecken der Zugfahrzeug-Anhängerkombination lediglich die Anhängerbremsen, nicht aber die Zugfahrzeugbremsen dosiert zugespannt werden.

Gemäß der Ausführungsform von Fig.24 sind das Relaisventil 18, die erste Magnetventileinrichtung 8 (erstes und zweites 2/2-Wegemagnetventil 10, 12), das Rückschlagventil 4, das Drosselelement 30, die elektronische Steuereinrichtung 14 sowie der Vorratsanschluss 2, der Anschluss 40 für den wenigstens einen Federspeicherbremszylinder und der Feststellbremssignalanschluss 32 in einer in Fig.24 durch eine strichpunktierte Linie symbolisierte Baueinheit 92 ausgebildet, die hier ein erweiterbares Grundmodul darstellt. In das Grundmodul bzw. die Baueinheit 92 können weiterhin zumindest ein Drucksensor 88 integriert sein, der hier beispielsweise mit dem Anschluss 40 für den wenigstens einen Federspeicherbremszylinder verbunden ist. Weiterhin sind natürlich auch die die genannten Komponenten pneumatisch oder elektrisch miteinander verbindenden elektrischen und pneumatischen Leitungen in die Baueinheit 92 integriert. Die Baueinheit oder das Grundmodul 92 kann ein einziges Gehäuse aufweisen oder aus mehreren, lösbar oder nicht lösbar miteinander verbundenen Gehäusen oder Gehäuseteilen bestehen.

Bei der Ausführungsform von Fig.25 ist das Grundmodul 92 von Fig.24 dahingehend modifiziert, dass das Rückschlagventil 4 und wenigstens ein Teil der Rückkopplungsleitung 26 zwischen dem Steuereingang 20 des Relaisventils 18 und dem Anschluss 40 für den wenigstens einen Federspeicherbremszylinder bzw. dem Arbeitsausgang 28 des Relaisventils 18 außerhalb der Baueinheit 92 angeordnet ist. Insbesondere das Rückschlagventil 4 kann je nach Fahrzeugausstattung bereits in ein Gerät zur Druckluftversorgung integriert sein, sodass es hier nicht mehr nötig ist. Für den externen Teil der Rückkopplungsleitung 26 ist dann ein eigener Anschluss 94 am Gehäuse 96 der Baueinheit 92 vorgesehen. Dann kann als Baueinheit 92 ein intern allenfalls gering modifizierter, bei elektronisch geregelten Betriebsbremsen (EBS) üblicherweise verwendeter elektropneumatischer Modulator (EPM) verwendet und durch die genannten äußeren Modifikationen angepasst werden.

Zusätzlich kann gemäß Fig.26 und Fig.27 die zweite Magnetventileinrichtung 68 außerhalb der Baueinheit 92 angeordnet sein. Die beispielsweise extern angeflanschte zweite Magnetventileinrichtung 68 wird dann von einer auch externen Vorratsleitung 6 mit Druckluft versorgt. Schließlich ist auch am Gehäuse 96 der Baueinheit 92 ein elektrischer Anschluss 98 für die zweite Magnetventileinrichtung 68 vorgesehen, damit diese über eine Signalleitung 100 von der Steuereinrichtung 14 der Baueinheit 92 gesteuert werden kann.

Mit an die Baueinheit 92 extern angeflanschter und verkabelter zweiter Magnetventileinrichtung 68 zur Realisierung der Testfunktion und/oder zur Steuerung der Anhängerbremsen kann hierfür beispielsweise ein übliches und in hoher Stückzahl gefertigtes ASR-Magnetventil (Antischlupfregelungsventil) verwendet werden.

Alternativ hierzu kann gemäß Fig.28 die zweite Magnetventileinrichtung 68 auch innerhalb der Baueinheit 92 angeordnet, beispielweise angeflanscht oder zusammengeschraubt werden, wodurch der Aufwand für externe Verrohrung und Verkabelung verringert wird.

Es sei noch erwähnt, dass eine Zusammenfassung der elektropneumatischen Parkbremssteuereinrichtung mit einem anderen elektronisch gesteuerten Fahrzeugsystem zu einer Baueinheit vorteilhaft sein kann, da eine gemeinsame, elektronische Steuereinrichtung vorgesehen werden kann. Insbesondere die Zusammenfassung mit einer Luftaufbereitungsanlage bietet Vorteile, da hier auch die Vorratsleitung zur elektropneumatischen Parkbremssteuereinrichtung entfallen kann.

Gemäß einer Weiterbildung nach Fig.29 und Fig.30 kann eine vierte Magnetventileinrichtung 102, durch welche die Funktion "Streckbremsen" realisiert wird, außerhalb oder innerhalb der Baueinheit 92 angeordnet sein. Diese vierte Magnetventileinrichtung 102 beinhaltet ein viertes 2/2-Wegemagnetventil 104, welches einerseits mit dem Anschluss 66 für das Anhängersteuerventil und andererseits mit einem fünften 2/2-Wegemagnetventil 106 verbunden ist, welches den Druck an dem vierten 2/2-Wegemagnetventil 104 in seiner Durchlassstellung an eine Drucksenke 108 weiter schaltet. Diese vierte Magnetventileinrichtung 102 ist in Strömungsrichtung gesehen der zweiten Magnetventileinrichtung 68 nachgeordnet, durch welche hier die "Testfunktion" realisiert wird.

Zum Streckbremsen muss das Anhängersteuerventil dosiert entlüftet werden können, weshalb hierzu das vierte 2/2-Wegemagnetventil 104 zunächst in Sperrstellung und das fünfte 2/2-Wegemagnetventil 106 abhängig von dem entsprechenden elektrischen Zuspannsignal z.B. wechselweise oder gepulst von der Sperrstellung in die Durchlassstellung geschaltet wird. Zum Lösen der Streckbremse wird dann das vierte 2/2- Wegemagnetventil ganz oder gepulst zurück in Durchlassstellung geschaltet. Ist die zweite Magnetventileinrichtung 68 als Kombination aus zwei 2/2- Wegemagnetventilen aufgebaut, so kann diese die Absperrfuntion bereits ausführen können sodass das 2/2- Wegemagnetventilen 104 entfallen kann.

Die Kombination von Merkmalen unterschiedlicher Ausführungsformen der Erfindung ist möglich und wird hiermit angeregt.

Bezugszeichenliste

| | |
|---|---|
| 1 | Bremssteuereinrichtung |
| 2 | Vorratsanschluss |
| 4 | Rückschlagventil |
| 6 | Vorratsleitung |
| 8 | erste Magnetventileinrichtung |
| 10 | erstes 2/2-Wegemagnetventil |
| 12 | zweites 2/2-Wegemagnetventil |
| 14 | Steuereinrichtung |
| 16 | Vorratseingang |
| 18 | Relaisventil |
| 20 | Steuereingang |
| 22 | Steuerleitung |

| 24 | Drucksenke |
|---|---|
| 26 | Rückkopplungsleitung |
| 28 | Arbeitsausgang |
| 30 | Drosselelement |
| 32 | Feststellbremssignalanschluss |
| 34 | Signalleitung |
| 36 | Feststellbremssignalgeber |
| 38 | Arbeitsleitung |
| 40 | Anschluss für Federspeicherbremszylinder |
| 42 | Steuerkammer |
| 44 | Gehäuse |
| 46 | Relaiskolben |
| 48 | Ventilkörper |
| 50 | Auslasssitz |
| 52 | Manschette |
| 54 | Einlasssitz |
| 56 | Entlüftung |
| 58 | Arbeitskammer |
| 60 | Vorratskammer |
| 62 | Manschettenfeder |
| 64 | Relaiskolbenfeder |
| 65 | weiteres Drosselelement |
| 66 | Anschluss für Anhängersteuerventil |
| 67 | Relaiskolbendichtung |
| 68 | zweite Magnetventileinrichtung |
| 70 | Wechselventil |
| 72 a/b | Ventil |
| 73 | elektrische Energiequelle |
| 74 | dritte Ventileinrichtung |
| 75 | Schalter |
| 78 | 1. Einlass |
| 80 | 2. Einlass |
| 82 | Auslass |
| 84 | Drucksenke |
| 86 | Betätigungsorgan |
| 88 | erster Drucksensor |
| 89 | zweiter Drucksensor |
| 90 | weiterer Drucksensor |
| 92 | Baueinheit |
| 94 | Anschluss |
| 96 | Gehäuse |
| 98 | Anschluss |
| 100 | Signalleitung |
| 102 | vierte Magnetventileinrichtung |
| 104 | viertes 2/2-Wegemagnetventil |
| 106 | fünftes 2/2-Wegemagnetventil |
| 108 | Drucksenke |

**Patentansprüche**

1. Elektropneumatische Parkbremssteuereinrichtung (1) zur Steuerung einer wenigstens einen Federspeicherbremszylinder beinhaltenden Feststellbremse, mit

   a) einem Anschluss (40) für den wenigstens einen Federspeicherbremszylinder,
   b) einer mittels einer elektronischen Steuereinrichtung (14) steuerbaren ersten Magnetventileinrichtung (8)
   b) einem Relaisventil (18), dessen pneumatischer Steuereingang (20) einerseits mit der ersten Magnetventileinrichtung (8) und andererseits mit dessen Arbeitsausgang (28) und mit dem Anschluss (40) für den wenigstens einen Federspeicherbremszylinder verbunden ist,

c) einem Vorratsanschluss (2) für wenigstens einen Druckluftvorrat, welcher einerseits mit der ersten Magnetventileinrichtung (8) und andererseits mit einem Vorratseingang (16) des Relaisventils (18) verbunden ist,

d) einer Rückkopplungsleitung (26), durch welche der Arbeitsausgang (28) und der pneumatische Steuereingang (20) des Relaisventils (18) miteinander verbindbar sind, **dadurch gekennzeichnet, dass**

e) die erste Magnetventileinrichtung (8) durch zwei 2/2-Wegemagnetventile (10, 12, 30) mit jeweils einer Sperrstellung und einer Durchlassstellung gebildet wird, wobei

f) ein erstes 2/2-Wegemagnetventil (10) als Einlassventil zwischen den Steuereingang (20) des Relaisventils (18) und den Vorratsanschluss (2) und ein zweites 2/2-Wegemagnetventil (12) zwischen den Steuereingang (20) des Relaisventils (18) und eine Drucksenke (24) geschaltet ist, wobei

g) in der Rückkopplungsleitung (26) wenigstens ein Drosselelement (30) angeordnet ist, derart, dass der Arbeitsausgang und der pneumatische Steuereingang (20) des Relaisventils (18) miteinander stets in Strömungsverbindung stehen.

2. Elektropneumatische Parkbremssteuereinrichtung nach Anspruch 1, **dadurch gekennzeichnet dass** das Relaisventil (18) eine mit dem pneumatischen Steuereingang (20) verbundene Steuerkammer (42), wenigstens einen vom Druck in der Steuerkammer (42) gesteuerten, ein Doppelsitzventil (50, 54) betätigenden Relaiskolben (46) sowie eine mit dem Arbeitsausgang (28) verbundene Arbeitskammer (58) aufweist, wobei der Relaiskolben (46) die Steuerkammer (42) und die Arbeitskammer (58) begrenzt und die eine der Steuerkammer (42) zugewandte Wirkfläche ($A_{SK}$) des Relaiskolbens (46) des Relaisventils (18) größer ist als eine der Arbeitskammer (58) des Relaiskolbens (46) zugewandte Wirkfläche ($A_{AK}$).

3. Elektropneumatische Parkbremse nach Anspruch 2, **dadurch gekennzeichnet dass** der Relaiskolben (46) durch Federmittel (64) in eine Entlüftungsstellung belastet ist, in welcher ein Auslasssitz (50) des durch den Relaiskolben (46) betätigten Doppelsitzventils geöffnet und ein Arbeitsanschluss (58) des Relaisventils (18) mit einer Entlüftung (56) verbunden ist.

4. Elektropneumatische Parkbremssteuereinrichtung nach einem der vorhergehenden Ansprüche 2 oder 3, **dadurch gekennzeichnet dass** die Steuerkammer (42) des Relaisventils (18) über ein weiteres Drosselelement (65) mit der Entlüftung (56) verbunden ist, wenn sich der Relaiskolben (46) in Entlüftungsstellung oder in einer Mittelstellung befindet und dass die Verbindung der Steuerkammer (42) mit der Entlüftung (56) über das weitere Drosselelement (65) getrennt ist, wenn sich der Relaiskolben (46) in Belüftungsstellung befindet, wobei die Mittelstellung des Relaiskolbens (46) **dadurch gekennzeichnet ist, dass** ein Einlasssitz (54) und ein Auslasssitz (50) eines durch den Relaiskolben (46) gesteuerten Doppelsitzventils geschlossen sind und die Belüftungsstellung des Relaiskolbens (46) dadurch, dass der Einlasssitz (54) des Doppelsitzventils geöffnet und der Auslasssitz (50) geschlossen ist.

5. Elektropneumatische Parkbremssteuereinrichtung nach einem der vorhergehenden Ansprüche, **dadurch gekennzeichnet, dass** die elektronische Steuereinrichtung (14) mit einem elektrischen Feststellbremssignalanschluss (32) für einen elektrischen Feststellbremssignalgeber (36) verbunden ist, über welchen Feststellbremssignale in die elektronische Steuereinrichtung (14) einsteuerbar sind.

6. Elektropneumatische Parkbremssteuereinrichtung nach einem der vorhergehenden Ansprüche, **dadurch gekennzeichnet, dass** die elektronische Steuereinrichtung (14) mit einem Signalanschluss zur Einsteuerung von Signalen verbunden ist, aus welchen die elektronische Steuereinrichtung (14) Feststellbremssignale generiert.

7. Elektropneumatische Parkbremssteuereinrichtung nach einem der vorhergehenden Ansprüche, **dadurch gekennzeichnet, dass** das erste 2/2-Wegemagnetventil (10) und das zweite 2/2-Wegemagnetventil (12) jeweils eine stromlose Sperrstellung und eine bestromte Durchlassstellung besitzen.

8. Elektropneumatische Parkbremssteuereinrichtung nach einem der vorhergehenden Ansprüche, **dadurch gekennzeichnet, dass** bei einem Einsteuern oder einem Generieren eines einen Zustand "Fahren" repräsentierenden Feststellbremssignals in die elektronische Steuereinrichtung (14) oder in der elektronischen Steuereinrichtung (14) das zweite 2/2-Wegemagnetventil (12) von der elektronischen Steuereinrichtung (14) in Sperrstellung und zunächst das erste 2/2-Wegemagnetventil (10) in Durchlassstellung und dann in Sperrstellung gesteuert wird.

9. Elektropneumatische Parkbremssteuereinrichtung nach einem der vorhergehenden Ansprüche, **dadurch gekennzeichnet, dass** bei einem Einsteuern oder einem Generieren eines einen Zustand "Feststellbremse mit bestimmtem Bremsdruckwert betätigen" repräsentierenden Feststellbremssignals in die elektronische Steuereinrichtung (14) oder in der elektronischen Steuereinrichtung (14) diese das erste 2/2-Wegemagnetventil (10) und/oder das zweite 2/2-Wegemagnetventil (12) abhängig von den dem jeweiligen Bremsdruckwert in Sperrstellung oder in Durchlassstellung steuert.

10. Elektropneumatische Parkbremssteuereinrichtung nach Anspruch 9, **dadurch gekennzeichnet, dass** die elektronische Steuereinrichtung (14) das erste 2/2-Wegemagnetventil (10) und/oder das zweite 2/2-Wegemagnetventil (12) wechselweise oder gepulst in Sperrstellung und in Durchlassstellung steuert.

11. Elektropneumatische Parkbremssteuereinrichtung nach einem der vorhergehenden Ansprüche, **dadurch gekennzeichnet, dass** bei einem Einsteuern oder Generieren eines einen Zustand "Feststellbremsen" repräsentierenden Feststellbremssignals in die elektronische Steuereinrichtung (14) oder in der Steuereinrichtung (14) diese das erste 2/2-Wegemagnetventil (10) in Sperrstellung und zunächst das zweite 2/2-Wegemagnetventil (12) in Durchlassstellung und dann das zweite 2/2-Wegemagnetventil (12) in Sperrstellung steuert.

12. Elektropneumatische Parkbremssteuereinrichtung nach einem der vorhergehenden Ansprüche, **dadurch gekennzeichnet, dass** sie für eine Zugfahrzeug-Anhängerkombination vorgesehen ist und einen Anschluss (66) für ein Anhängersteuerventil aufweist, welcher mit dem Anschluss (40) für den wenigstens einen Federspeicherbremszylinder verbindbar ist.

13. Elektropneumatische Parkbremssteuereinrichtung nach Anspruch 12, **dadurch gekennzeichnet, dass** eine zweite, von der elektronischen Steuereinrichtung (14) steuerbare Magnetventileinrichtung (68) vorgesehen ist, welche ausgebildet ist, dass sie entweder den Vorratsanschluss (2) mit dem Anschluss (66) für das Anhängersteuerventil oder den Arbeitsausgang (28) des Relaisventils (18) mit dem Anschluss (66) für das Anhängersteuerventil verbindet.

14. Elektropneumatische Parkbremssteuereinrichtung nach Anspruch 13, **dadurch gekennzeichnet, dass** die zweite Magnetventileinrichtung (68) durch ein einziges 3/2-Wegemagnetventil oder zwei 2/2-Wegemagnetventile gebildet wird.

15. Elektropneumatische Parkbremssteuereinrichtung nach Anspruch 13 oder 14, **dadurch gekennzeichnet, dass** bei einem Einsteuern oder Generieren eines einen Zustand "Test" repräsentierenden Feststellbremssignals in die elektronische Steuereinrichtung (14) oder in der elektronischen Steuereinrichtung (14) die zweite Magnetventileinrichtung (68) von der elektronischen Steuereinrichtung (14) derart gesteuert ist, dass sie den Vorratsanschluss (2) mit dem Anschluss (66) für das Anhängersteuerventil verbindet.

16. Elektropneumatische Parkbremssteuereinrichtung nach einem der Ansprüche 13 bis 15, **dadurch gekennzeichnet, dass** die zweite Magnetventileinrichtung (68) ausgebildet ist, dass sie stromlos den Vorratsanschluss (2) mit dem Anschluss (66) für das Anhängersteuerventil und bestromt den Arbeitsausgang (28) des Relaisventils (18) mit dem Anschluss (66) für das Anhängersteuerventil verbindet.

17. Elektropneumatische Parkbremssteuereinrichtung nach einem der Ansprüche 13 bis 16, **dadurch gekennzeichnet, dass** eine vierte Magnetventileinrichtung (102) vorgesehen ist, durch welche der von der zweiten Magnetventileinrichtung (68) an den Anschluss (66) für das Anhängersteuerventil ausgesteuerte Druck absperrbar oder weiterleitbar ist, wobei bei durch die vierte Magnetventileinrichtung (102) abgesperrtem, von der zweiten Magnetventileinrichtung (68) erzeugtem Druck der am Anschluss für das Anhängersteuerventil (66) anstehende Druck in Bezug auf eine Drucksenke (108) absperrbar oder in diese Drucksenke (108) weiter leitbar ist.

18. Elektropneumatische Parkbremssteuereinrichtung nach einem der vorhergehenden Ansprüche, **dadurch gekennzeichnet, dass** eine dritte Ventileinrichtung (74) vorgesehen ist, mit wenigstens einem manuell oder elektrisch steuerbaren Ventil (72a, 72b) mit einer Durchlassstellung und einer Sperrstellung, welches in der Durchlassstellung den Steuereingang (20) des Relaisventils (18) mit einer Drucksenke (84) verbindet oder in der Sperrstellung diese Verbindung sperrt.

19. Elektropneumatische Parkbremssteuereinrichtung nach einem der vorhergehenden Ansprüche, **dadurch gekennzeichnet, dass** wenigstens ein Drucksensor (88) mit dem Anschluss (40) für den wenigstens einen Federspeicherbremszylinder und/oder wenigstens ein Drucksensor (89) mit dem Steuereingang (20) des Relaisventils (18) und/oder wenigstens ein Drucksensor (90) mit dem Anschluss (66) für das Anhängersteuerventil verbunden ist, welcher ein einen Ist-Druck repräsentierendes Signal in die elektronische Steuereinrichtung (14) einsteuert.

20. Elektropneumatische Parkbremssteuereinrichtung nach Anspruch 14, **dadurch gekennzeichnet, dass** die elektronische Steuereinrichtung (14) ausgebildet ist, dass sie auf der Basis des den Ist-Druck repräsentierenden Signals und eines einen Wert für einen Soll-Druck repräsentierenden Signals einen Soll-Ist-Abgleich im Rahmen einer Druckregelung durchführt und/oder eine Druck-Plausibilitätsprüfung und/oder eine Ermittlung des am Vorratsanschluss (2) anstehenden Vorratsdrucks durchführt.

21. Elektropneumatische Parkbremssteuereinrichtung nach einem der vorhergehenden Ansprüche, **dadurch gekennzeichnet, dass** der Vorratsanschluss (2) über ein Rückschlagventil (4) abgesichert ist.

22. Elektropneumatische Parkbremssteuereinrichtung nach Anspruch 21, **dadurch gekennzeichnet, dass** wenigstens das Relaisventil (18), die erste Magnetventileinrichtung (8), das Rückschlagventil (4), das wenigstens eine Drosselelement (30), die elektronische Steuereinrichtung (14) sowie der Vorratsanschluss (2), der Anschluss (40) für den wenigstens einen Federspeicherbremszylinder und der Feststellbremssignalanschluss (32) in einer Baueinheit (92) ausgebildet sind.

23. Elektropneumatische Parkbremssteuereinrichtung nach Anspruch 21, **dadurch gekennzeichnet, dass** wenigstens das Relaisventil (18), die erste Magnetventileinrichtung (8), die elektronische Steuereinrichtung (14), das wenigstens eine Drosselelement (30) sowie der Vorratsanschluss (2), der Anschluss (40) für den wenigstens einen Federspeicherbremszylinder, der Anschluss (66) für das Anhängersteuerventil und der Feststellbremssignalanschluss (32) in einer Baueinheit (92) ausgebildet sind, wobei wenigstens das Rückschlagventil (4) und wenigstens ein Teil der Rückkopplungsleitung (26) außerhalb der Baueinheit (92) angeordnet sind.

24. Elektropneumatische Parkbremssteuereinrichtung nach einem der Ansprüche 13 bis 17 und 22 oder 23, **dadurch gekennzeichnet, dass** die zweite Magnetventileinrichtung (68) außerhalb der Baueinheit (92) angeordnet ist.

25. Elektropneumatische Parkbremssteuereinrichtung nach einem der Ansprüche 13 bis 17 und 22 oder 23, **dadurch gekennzeichnet, dass** die zweite Magnetventileinrichtung (68) innerhalb der Baueinheit (92) angeordnet ist.

26. Elektropneumatische Parkbremssteuereinrichtung nach Anspruch 17 und einem der Ansprüche 21 bis 25, **dadurch gekennzeichnet, dass** die vierte Magnetventileinrichtung (102) außerhalb der Baueinheit (92) angeordnet ist.

27. Elektropneumatische Parkbremssteuereinrichtung nach Anspruch 17 und einem der Ansprüche 21 bis 25, **dadurch gekennzeichnet, dass** die vierte Magnetventileinrichtung (102) innerhalb der Baueinheit (92) angeordnet ist.

28. Bremsanlage eines Fahrzeugs, beinhaltend eine elektropneumatische Parkbremssteuereinrichtung (1) nach wenigstens einem der vorhergehenden Ansprüche.

**Claims**

1. An electro-pneumatic parking brake control device (1) for controlling an immobilisation brake containing at least one spring brake cylinder and comprising:

   a) a connection (40) for the at least one spring brake cylinder,
   b) a first solenoid valve device (8) which can be controlled by means of an electronic control device (14),
   b) a relay valve (18), whose pneumatic control inlet (20) is connected on one side to the first solenoid valve device (8) and on the other to its working outlet (28) and to the connection (40) for the at least one spring brake cylinder,
   c) a supply connection (2) for at least one compressed air supply which is connected on one side to the first solenoid valve device (8) and on the other to the supply inlet (16) of the relay valve (18),
   d) a feedback line (26), by means of which the working outlet (28) and the pneumatic control inlet (20) of the relay valve (18) can be connected to one another, **characterised in that**
   e) the first solenoid valve device (8) is formed by two 2/2-way solenoid valves (10, 12, 30), each having a closed position and an open position,
   f) a first 2/2-way solenoid valve (10) being connected as an inlet valve between the control inlet (20) of the relay valve (18) and the supply connection (2), and a second 2/2-way solenoid valve (12) being connected between the control inlet (20) of the relay valve (18) and a pressure sink (24),
   g) at least one throttle element (30) being arranged in the feedback line (26) in such a way that the working outlet and the pneumatic control inlet (20) of the relay valve (18) always stand in a flow connection with one another.

2. An electro-pneumatic parking brake control device according to claim 1, **characterised in that** the relay valve (18) has a control chamber (42) connected to the pneumatic control inlet (20), at least one relay piston (46) controlled by the pressure in the control chamber (42) and actuating a double-seat valve (50, 54) and a working chamber (58) connected to the working outlet (28), the relay piston (46) delimiting the control chamber (42) and the working chamber (58) and an effective area ($A_{SK}$) of the relay piston (46) of the relay valve (18) facing the control chamber (42) being larger than an effective area ($A_{AK}$) facing the working chamber (58) of the relay piston (46).

3. An electro-pneumatic parking brake according to claim 2, **characterised in that** the relay piston (46) is loaded by spring means (64) into a de-aeration position in which an outlet seat (50) of the double-seat valve controlled by the relay piston (46) is opened and a working connection (58) of the relay valve (18) is connected to a de-aeration device (56).

4. An electro-pneumatic parking brake control device according to one of the preceding claims 2 or 3, **characterised in that** when the relay piston (46) is in the de-aeration position or in a middle position, the control chamber (42) of the relay valve (18) is connected to the de-aeration device (56) by a further throttle element (65), and that when the relay piston (46) is in the aeration position, the connection between the control chamber (42) and the de-aeration device (56) is unmade by the further throttle element (65), the middle position of the relay piston (46) being **characterised in that** an inlet seat (54) and an outlet seat (50) of a double-seat valve controlled by the relay piston (46) are closed, and the aeration position of the relay piston (46) being **characterised in that** the inlet seat (54) of the double-seat valve is open and the outlet seat (50) is closed.

5. An electro-pneumatic parking brake control device according to one of the preceding claims, **characterised in that** the electronic control device (14) is connected to an electric immobilisation brake signal connection (32) for an electric immobilisation brake signal generator (36), via which immobilisation brake signals can be transmitted to the electronic control device (14).

6. An electro-pneumatic parking brake control device according to one of the preceding claims, **characterised in that** the electronic control device (14) is connected to a signal connection for transmitting signals from which the electronic control device (14) generates immobilisation brake signals.

7. An electro-pneumatic parking brake control device according to one of the preceding claims, **characterised in that** the first 2/2-way solenoid valve (10) and the second 2/2-way solenoid valve (12) each have a de-energised closed position and an energised open position.

8. An electro-pneumatic parking brake control device according to one of the preceding claims, **characterised in that,** when an immobilisation brake signal representing a "drive" state is transmitted to the electronic control device (14) or generated in the electronic control device (14), the second 2/2-way solenoid valve (12) is moved by the electronic control device (14) into the closed position and the first 2/2-way solenoid valve (10) is moved initially into the open position and then into the closed position.

9. An electro-pneumatic parking brake control device according to one of the preceding claims, **characterised in that,** when an immobilisation brake signal representing an "actuate immobilisation brake with specific brake pressure value" state is transmitted to the electronic control device (14) or generated in the electronic control device (14), the first 2/2-way solenoid valve (10) and/or the second 2/2-way solenoid valve (12) is/are moved into the closed position or into the open position depending on the corresponding brake pressure value.

10. An electro-pneumatic parking brake control device according to claim 9, **characterised in that** the electronic control device (14) moves the first 2/2-way solenoid valve (10) and/or the second 2/2-way solenoid valve (12) into the closed position and the open position alternately or in a pulsed manner.

11. An electro-pneumatic parking brake control device according to one of the preceding claims, **characterised in that,** when an immobilisation brake signal representing an "apply immobilisation brake" state is transmitted to the electronic control device (14) or generated in the electronic control device (14), the first 2/2-way solenoid valve (10) is moved into the closed position and the second 2/2-way solenoid valve (12) is moved initially into the open position and then into the closed position.

**12.** An electro-pneumatic parking brake control device according to one of the preceding claims, **characterised in that** it is provided for a towing vehicle and trailer combination and has a connection (66) for a trailer control valve, which can be connected to the connection (40) for the at least one spring brake cylinder.

**13.** An electro-pneumatic parking brake control device according to claim 12, **characterised in that** a second solenoid valve device (68) which can be controlled by the electronic control device (14) is provided and is designed such that it connects either the supply connection (2) to the connection (66) for the trailer control valve or the working outlet (28) of the relay valve (18) to the connection (66) for the trailer control valve.

**14.** An electro-pneumatic parking brake control device according to claim 13, **characterised in that** the second solenoid valve device (68) is formed by a single 3/2-way solenoid valve or two 2/2-way solenoid valves.

**15.** An electro-pneumatic parking brake control device according to claim 13 or 14, **characterised in that,** when an immobilisation brake signal representing a "test" state is transmitted to the electronic control device (14) or generated in the electronic control device (14), the second solenoid valve device (68) is moved by the electronic control device (14) in such a way that it connects the supply connection (2) to the connection (66) for the trailer control valve.

**16.** An electro-pneumatic parking brake control device according to one of claims 13 to 15, **characterised in that** the second solenoid valve device (68) is designed such that it connects the supply connection (2) to the connection (66) for the trailer control valve in a de-energised manner and connects the working outlet (28) of the relay valve (18) to the connection (66) for the trailer control valve in an energised manner.

**17.** An electro-pneumatic parking brake control device according to one of claims 13 to 16, **characterised in that** there is provided a fourth solenoid valve device (102), by means of which the pressure created by the second solenoid valve device (68) at the connection (66) for the trailer control valve can be blocked or forwarded, it being possible to block the pressure present at the connection for the trailer control valve (66) from the pressure sink (108) or forward it to said pressure sink (108) when the pressure generated by the second solenoid valve device (68) is blocked by the fourth solenoid valve device (102).

**18.** An electro-pneumatic parking brake control device according to one of the preceding claims, **characterised in that** there is provided a third valve device (74) having at least one manually or electrically controllable valve (72a, 72b) with an open position and a closed position, which valve connects the control inlet (20) of the relay valve (18) to a pressure sink (84) in the open position or blocks this connection in the closed position.

**19.** An electro-pneumatic parking brake control device according to one of the preceding claims, **characterised in that** at least one pressure sensor (88) is connected to the connection (40) for the at least one spring brake cylinder and/or at least one pressure sensor (89) is connected to the control inlet (20) of the relay valve (18) and/or at least one pressure sensor (90) is connected to the connection (66) for the trailer control valve, said pressure sensor(s) transmitting a signal representing an actual pressure to the electronic control device (14).

**20.** An electro-pneumatic parking brake control device according to claim 14, **characterised in that** the electronic control device (14) is designed such that, as part of a pressure regulation process, it carries out a target-actual comparison on the basis of the signal representing the actual pressure and a signal representing a value for a target pressure, and/or carries out a pressure plausibility check and/or determines the supply pressure present at the supply connection (2).

**21.** An electro-pneumatic parking brake control device according to one of the preceding claims, **characterised in that** the supply connection (2) is secured by a check valve (4).

**22.** An electro-pneumatic parking brake control device according to claim 21, **characterised in that** at least the relay valve (18), the first solenoid valve device (8), the check valve (4), the at least one throttle element (30), the electronic control device (14) and the supply connection (2), the connection (40) for the at least one spring brake cylinder and the immobilisation brake signal connection (32) are formed in a modular unit (92).

**23.** An electro-pneumatic parking brake control device according to claim 21, **characterised in that** at least the relay valve (18), the first solenoid valve device (8), the electronic control device (14), the at least one throttle element (30) and the supply connection (2), the connection (40) for the at least one spring brake cylinder, the connection (66) for the trailer control valve and the immobilisation brake signal connection (32) are formed in a modular unit (92), at least the check valve (4) and at least part of the feedback line (26) being arranged outside the modular unit (92).

24. An electro-pneumatic parking brake control device according to one of claims 13 to 17 and 22 or 23, **characterised in that** the second solenoid valve device (68) is arranged outside the modular unit (92).

25. An electro-pneumatic parking brake control device according to one of claims 13 to 17 and 22 or 23, **characterised in that** the second solenoid valve device (68) is arranged inside the modular unit (92).

26. An electro-pneumatic parking brake control device according to claim 17 and one of claims 21 to 25, **characterised in that** the fourth solenoid valve device (102) is arranged outside the modular unit (92).

27. An electro-pneumatic parking brake control device according to claim 17 and one of claims 21 to 25, **characterised in that** the fourth solenoid valve device (102) is arranged inside the modular unit (92).

28. A braking system of a vehicle containing an electro-pneumatic parking brake control device (1) according to at least one of the preceding claims.


**Revendications**

1. Dispositif (1) de commande électropneumatique de frein de stationnement pour commander un frein de stationnement comportant au moins un cylindre de frein à ressort accumulateur, comprenant

   a) un raccord (40) pour le au moins un cylindre de frein à ressort accumulateur,
   b) un premier dispositif (8) à électrovanne pouvant être commandé au moyen d'un dispositif (14) électronique de commande
   b) une vanne (18) relais, dont l'entrée (20) de commande pneumatique est reliée, d'une part, au premier dispositif (8) à électrovanne et, d'autre part, à sa sortie (28) de travail et au raccord (40) pour le au moins un cylindre de frein à ressort accumulateur,
   c) un raccord (2) de réservoir, pour au moins un réservoir d'air comprimé, qui est relié d'une part, au premier dispositif (8) à électrovanne et d'autre part, à une entrée (16) de réservoir de la vanne (18) relais,
   d) un conduit (26) de retour, par lequel la sortie (28) de travail et l'entrée (20) de commande pneumatique de la vanne (18) relais peuvent être reliées ensemble, **caractérisé en ce que**
   e) le premier dispositif (8) à électrovanne est formé de deux électrovannes (10, 12, 30) à 2/2 voies, ayant chacune une position d'arrêt et une position de passage, dans lequel
   f) une première électrovanne (10) à 2/2 voies est montée en tant que vanne d'entrée entre l'entrée (20) de commande de la vanne (18) relais et le raccord (2) de réservoir, et une deuxième électrovanne (12) à 2/2 voies est montée entre l'entrée (20) de commande de la vanne (18) relais et un puits (24) de pression, dans lequel
   g) au moins un élément (30) d'étranglement est monté dans le conduit (26) de retour, de manière à ce que la sortie de travail et l'entrée (20) de commande pneumatique de la vanne (18) relais soient toujours entre elles en liaison fluidique.

2. Dispositif électropneumatique de commande de frein de stationnement suivant la revendication 1, **caractérisé en ce que** la vanne (18) relais a une chambre (42) de commande reliée à l'entrée (20) de commande pneumatique, au moins un piston (46) relais, commandé par la pression dans la chambre (42) de commande et actionnant une vanne (50, 54) à double siège, ainsi qu'une chambre (58) de travail reliée à la sortie (28) de travail, le piston (46) relais délimitant la chambre (42) de commande et la chambre (58) de travail et la surface ($A_{SK}$) active, tournée vers la chambre (42) de commande, du piston (46) relais de la vanne (18) relais, est plus grande que la surface ($A_{AK}$) active, tournée vers la chambre (58) de travail du piston (46) relais.

3. Dispositif électropneumatique de commande de frein de stationnement suivant la revendication 2, **caractérisé en ce que** le piston (46) relais est soumis à des moyens (64) de ressort dans une position de mise à l'atmosphère, dans laquelle un siège (50) de sortie de la vanne à double siège, actionnée par le piston (46) relais, est ouvert et un raccord (58) de travail de la vanne (18) relais est relié à la mise (56) à l'atmosphère.

4. Dispositif électropneumatique de commande de frein de stationnement suivant l'une des revendications précédentes 2 ou 3, **caractérisé en ce que** la chambre (42) de commande de la vanne (18) relais est reliée, à la mise (56) à l'atmosphère par un autre élément (65) d'étranglement, lorsque le piston (46) relais se trouve dans la position de

EP 3 129 264 B1

mise à l'atmosphère ou dans une position médiane, et **en ce que** la liaison de la chambre (42) de commande à la mise (56) à l'atmosphère est séparée par l'autre élément (65) d'étranglement, lorsque le piston (46) relais se trouve en la position d'alimentation en air, la position médiane du piston (46) relais étant **caractérisée en ce qu'**un siège (54) d'entrée et un siège (50) de sortie d'une vanne à double siège commandée par le piston (46) relais sont fermés, et la position d'alimentation en air du piston (46) relais, par le fait que le siège (54) d'entrée de la vanne à double siège est ouvert et le siège (50) de sortie est fermé.

5. Dispositif électropneumatique de commande de frein de stationnement suivant l'une des revendications précédentes, **caractérisé en ce que** le dispositif (14) électronique de commande est relié à une borne (32) électrique de signal de frein de stationnement pour un transmetteur (36) électrique de signal de frein de stationnement, par lesquels des signaux de frein de stationnement peuvent être entrés dans le dispositif (14) électronique de commande.

6. Dispositif électropneumatique de commande de frein de stationnement suivant l'une des revendications précédentes, **caractérisé en ce que** le dispositif (14) électronique de commande est relié à une borne de signal pour l'entrée de signaux, à partir desquels le dispositif (14) électronique de commande produit des signaux de frein de stationnement.

7. Dispositif électropneumatique de commande de frein de stationnement suivant l'une des revendications précédentes, **caractérisé en ce que** la première électrovanne (10) à 2/2 voies et la deuxième électrovanne (12) à 2/2 voies ont chacune une position d'arrêt sans courant et une position de passage avec alimentation en courant.

8. Dispositif électropneumatique de commande de frein de stationnement suivant l'une des revendications précédentes, **caractérisé en ce que**, lors de l'entrée d'un signal de frein de stationnement représentant un état "marche" dans le dispositif (14) électronique de commande, ou lors de sa production dans le dispositif (14) électronique de commande, la deuxième électrovanne (12) à 2/2 voies est mise dans la position d'arrêt par le dispositif (14) électronique de commande et la première électrovanne (10) à 2/2 voies est mise d'abord en position de passage et ensuite en position d'arrêt.

9. Dispositif électropneumatique de commande de frein de stationnement suivant l'une des revendications précédentes, **caractérisé en ce que**, lors de l'entrée d'un signal de frein de stationnement représentant un état "frein de stationnement actionné à une valeur déterminée de la pression de frein", dans le dispositif (14) électronique de commande ou produit dans le dispositif (14) électronique de commande, celui-ci met la première électrovanne (10) à 2/2 voies et/ou la deuxième électrovanne (12) à 2/2 voies, dans la position d'arrêt ou dans la position de passage, en fonction de la valeur de la pression de freinage respective.

10. Dispositif électropneumatique de commande de frein de stationnement suivant la revendication 9, **caractérisé en ce que** le dispositif (14) électronique de commande met la première électrovanne (10) à 2/2 voies et/ou la deuxième électrovanne (12) à 2/2 voies, en alternance ou de façon pulsée en position d'arrêt et en position de passage.

11. Dispositif électropneumatique de commande de frein de stationnement suivant l'une des revendications précédentes, **caractérisé en ce que**, lors de l'entrée d'un signal de frein de stationnement représentant un état "freinage de stationnement" dans le dispositif (14) électronique de commande ou sa production dans le dispositif (14) électronique de commande, celui-ci met la première électrovanne (10) à 2/2 voies dans la position d'arrêt, et la deuxième électrovanne (12) à 2/2 voies d'abord dans la position de passage, et ensuite la deuxième électrovanne (12) à 2/2 voies dans la position d'arrêt.

12. Dispositif électropneumatique de commande de frein de stationnement suivant l'une des revendications précédentes, **caractérisé en ce qu'**il est prévu pour une combinaison véhicule de traction-remorque et a un raccord (66) pour une vanne de commande de remorque, qui peut être reliée au raccord (40) pour le au moins un cylindre de frein à ressort accumulateur.

13. Dispositif électropneumatique de commande de frein de stationnement suivant la revendication 12, **caractérisé en ce qu'**il est prévu un deuxième dispositif (68) à électrovanne, qui peut être commandé par le dispositif (14) électronique de commande et qui est constitué, de manière à ce qu'il relie, soit le raccord (2) de réservoir au raccord (66) pour la vanne de commande de remorque, soit la sortie (28) de travail de la vanne (18) relais, au raccord (66) pour la vanne de commande de remorque.

14. Dispositif électropneumatique de commande de frein de stationnement suivant la revendication 13, **caractérisé en ce que** le deuxième dispositif (68) à électrovanne est formé d'une électrovanne à 3/2 voies unique ou de deux électrovannes à 2/2 voies.

**15.** Dispositif électropneumatique de commande de frein de stationnement suivant la revendication 13 ou 14, **caractérisé en ce que**, lors de l'entrée d'un signal frein de stationnement représentant un état "test" dans le dispositif (14) électronique de commande ou lors de sa production dans le dispositif (14) électronique de commande, le deuxième dispositif (68) à électrovanne est commandé par le dispositif (14) électronique de commande, de manière à ce qu'il relie le raccord (2) de réservoir au raccord (66) pour la vanne de commande de remorque.

**16.** Dispositif électropneumatique de commande de frein de stationnement suivant l'une des revendications 13 à 15, **caractérisé en ce que** le deuxième dispositif (68) à électrovanne est constitué, de manière à ce qu'il relie, sans courant, le raccord (2) de réservoir au raccord (66) pour la vanne de commande de remorque et, alimenté en courant, relie la sortie (28) de travail de la vanne (18) relais au raccord (66) pour la vanne de commande de remorque.

**17.** Dispositif électropneumatique de commande de frein de stationnement suivant l'une des revendications 13 à 16, **caractérisé en ce qu'**il est prévu un quatrième dispositif (102) à électrovanne, par lequel la pression commandée, par le deuxième dispositif (68) à électrovanne, sur le raccord (66) pour la vanne de commande de remorque, peut être bloquée ou acheminée, dans lequel à la pression bloquée par le quatrième dispositif (102) à électrovanne et produite par le deuxième dispositif (68) à électrovanne, la pression appliquée au raccord pour la vanne (66) de commande de remorque peut être bloquée par rapport à un puits (108) de pression ou être acheminée dans ce puits (108) de pression.

**18.** Dispositif électropneumatique de commande de frein de stationnement suivant l'une des revendications précédentes, **caractérisé en ce qu'**il est prévu un troisième dispositif (74) de vanne, ayant au moins une vanne (72a, 72b) pouvant être commandée manuellement ou électriquement, et ayant une position de passage et une position d'arrêt, vanne qui, dans la position de passage, relie l'entrée (20) de commande de la vanne (18) relais à un puits (84) de pression ou, dans la position d'arrêt, interrompt cette liaison.

**19.** Dispositif électropneumatique de commande de frein de stationnement suivant l'une des revendications précédentes, **caractérisé en ce qu'**au moins un capteur (88) de pression est relié au raccord (40) pour le au moins un cylindre de frein à ressort accumulateur et/ou au moins un capteur (89) de pression est relié à l'entrée (20) de commande de la vanne (18) relais et/ou au moins un capteur (90) de pression est relié au raccord (66) pour la vanne de commande de remorque, capteur qui entre un signal représentant la pression réelle dans le dispositif (14) électronique de commande.

**20.** Dispositif électropneumatique de commande de frein de stationnement suivant la revendication 14, **caractérisé en ce que** le dispositif (14) électronique de commande est constitué, de manière à ce qu'il effectue, sur la base du signal représentant la pression réelle et d'un signal représentant une valeur d'une pression de consigne, une égalisation consigne-réelle dans le cadre d'une régulation de pression, et/ou un contrôle de la vraisemblance de la pression et/ou une détermination de la pression de réservoir appliquée au raccord (2) de réservoir.

**21.** Dispositif électropneumatique de commande de frein de stationnement suivant l'une des revendications précédentes, **caractérisé en ce que** le raccord (2) de réservoir est sécurisé par un clapet anti-retour (4).

**22.** Dispositif électropneumatique de commande de frein de stationnement suivant la revendication 21, **caractérisé en ce qu'**au moins la vanne (18) relais, le premier dispositif (8) électrovanne, le clapet anti-retour (4), le au moins un élément (30) d'étranglement, le dispositif (14) électronique de commande, ainsi que le raccord (2) de réservoir, le raccord (40) pour le au moins un cylindre de frein à ressort accumulateur et la borne (32) de signal de frein de stationnement sont constitués en une unité (92) de construction.

**23.** Dispositif électropneumatique de commande de frein de stationnement suivant la revendication 21, **caractérisé en ce qu'**au moins la vanne (18) relais et le premier dispositif (8) à électrovanne, le dispositif (14) électronique de commande, le au moins un élément (30) d'étranglement, ainsi que le raccord (2) de réservoir, le raccord (40) pour le au moins un cylindre de frein à ressort accumulateur, le raccord (66) pour la vanne de commande de remorque et la borne (30) de signal de frein de stationnement sont constitués en une unité (92) de construction, au moins le clapet anti-retour (4) et au moins une partie du conduit (26) de retour, étant disposés à l'extérieur de l'unité (92) de construction.

**24.** Dispositif électropneumatique de commande de frein de stationnement suivant l'une des revendications 13 à 17 et 22 ou 23, **caractérisé en ce que** le deuxième dispositif (68) à électrovanne est disposé à l'extérieur de l'unité (92) de construction.

25. Dispositif électropneumatique de commande de frein de stationnement suivant l'une des revendications 13 à 17 et 22 ou 23, **caractérisé en ce que** le deuxième dispositif (68) à électrovanne est disposé à l'intérieur de l'unité (92) de construction.

26. Dispositif électropneumatique de commande de frein de stationnement suivant la revendication 17 et l'une des revendications 21 à 25, **caractérisé en ce que** le quatrième dispositif (102) à électrovanne est disposé à l'extérieur de l'unité (92) de construction.

27. Dispositif électropneumatique de commande de frein de stationnement suivant la revendication 17 et l'une des revendications 21 à 25, **caractérisé en ce que** le quatrième dispositif (102) à électrovanne est disposé à l'intérieur de l'unité (92) de construction.

28. Système de freinage d'un véhicule, comportant un dispositif (1) électropneumatique de commande de frein de stationnement suivant au moins l'une des revendications précédentes.

FIG.1

FIG.2

FIG.3

FIG.4

FIG.5

FIG.6

FIG.7

2

14

10

12

22

30

6

20

$A_{SK}$

42

46

26

58

$A_{AK}$

40

56

18

FIG.8

FIG.9

FIG.10

FIG.11

FIG.12

FIG.13

FIG.14

FIG.15

FIG.16

FIG.17

FIG.18

FIG.19

FIG.20

FIG.21

FIG.22

FIG.23

FIG.24

FIG.25

FIG.26

FIG.27

FIG.28

FIG.29

FIG.30

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009016983 A1
- DE 10247812 C1
- DE 102006055570 B4
- DE 102007061908 B4